# EUROPÄISCHE PATENTANMELDUNG

(11) **EP 4 219 047 A1**
(43) Veröffentlichungstag der Anmeldung: **02.08.2023**
(21) Anmeldenummer: 22154514.8
(22) Anmeldetag: 01.02.2022
(51) Int. Cl.: B22F 10/14, B22F 10/18, B22F 12/13, B22F 12/17, B22F 12/30, B29C 64/165, B29C 64/182, B29C 64/223, B29C 64/232, B29C 64/241, B29C 64/245, B29C 64/264, B29C 64/35, B33Y 10/00, B33Y 30/00, B29C 64/141, B22F 3/02, B22F 3/03, B22F 3/16, B32B 37/00, B22F 12/82

(54) **FERTIGUNGSVORRICHTUNG ZUM SCHICHTWEISEN FERTIGEN VON OBJEKTEN**

(71) Anmelder: Technische Universität München, 80333 München (DE)
(72) Erfinder: ABSTREITER, Tobias, 84435 Lengdorf (DE); KOPIC, Inola, 80689 München (DE); MAYR, Peter, 85570 Markt Schwaben (DE); RÖPFL, Leonhard, 83734 Hausham (DE); MATSCHINSKI, Alexander, 80337 München (DE)
(74) Vertreter: Hoefer & Partner Patentanwälte mbB

(57) **Zusammenfassung**

Die Erfindung betrifft eine Fertigungsvorrichtung (1) zum schichtweisen Fertigen von Objekten (7), aufweisend zumindest eine Transferplattform (2) mit einer Transferplattformoberfläche (2A), zumindest eine Ausbringeinheit (3), ausgebildet zum Aufbringen zumindest einer Behandlungsschicht (8A) und zumindest einer Materialschicht (8B), insbesondere umfassend granulatförmiges und/oder pulverförmiges Material, welche zusammen eine Vormaterialschicht des Objektes (7) bilden, auf die Transferplattformoberfläche (2A), wobei sich die Vormaterialschicht insbesondere in eine erste Richtung (x) und in eine zweite Richtung (y) erstreckt, und eine Bauplattform (4), ausgebildet zum Übernehmen zumindest der Materialschicht (8A) der Vormaterialschicht von der Transferplattform (2), so dass das Objekt (7) auf der Bauplattform (4) insbesondere in eine dritte Richtung (z) schichtweise hergestellt wird. Die Erfindung betrifft außerdem ein Verfahren zum schichtweisen Fertigen von Objekten (7).

## Beschreibung

Die Erfindung betrifft eine Fertigungsvorrichtung. Die Fertigungsvorrichtung dient zum schichtweisen Fertigen von Objekten. Die Erfindung betrifft außerdem ein Verfahren zum schichtweisen Fertigen von Objekten. Eine solche Fertigungsweise wird auch additive Fertigung oder 3D-Druck genannt.

Aus dem Stand der Technik sind Fertigungsvorrichtungen bekannt, die Material additiv auftragen, um eine gewünschte räumliche Geometrie zu erzeugen. Dabei haben insbesondere Pulverbettverfahren zur Herstellung metallischer Bauteile Einzug in die Industrie gefunden. Alle Pulverbettverfahren haben gemein, dass das Aufbaumaterial in Pulverform vorliegt und dieses innerhalb eines Pulverbetts selektiv verbunden wird. Dies kann herkömmlicherweise durch den Einsatz von Strahlquellen (Elektronen- oder Laserstrahl) und das selektive Aufschmelzen des Pulvers erfolgen. Eine besondere Rolle bei den Pulverbettverfahren nehmen Binder-Jetting Prozesse ein, bei denen innerhalb des Pulverbetts zuerst ein Grünling durch Aufbringen einer bindenden Flüssigkeit, dem sogenannten Binder, erzeugt und dieser im Nachgang herkömmlicherweise durch eine Wärmebehandlung (das sogenannte Entbindern und Sintern) zum endgültigen Metall-Bauteil veredelt wird. Ein entscheidender Nachteil des Binder-Jettings ist die Tatsache, dass beim Entbindern und Sintern oftmals Rückstände des Binders oder dessen Zersetzungsprodukte im Bauteil zurückbleiben, welche als Fremdstoffe innerhalb der Metallmatrix wirken und somit negative Materialeigenschaften hervorrufen können. Des Weiteren stoßen herkömmliche Binder-Jetting Verfahren bei massiven Bauten an ihre Grenzen, da durch große Wandstärken das Entbindern nur schwer realisierbar ist und verminderte Festigkeiten zur Folge hat. Ein weiterer Nachteil dieser herkömmlichen Verfahren ist die Schrumpfung der Grünlinge beim Sintern, welche bis zu 20% des ursprünglich gedruckten Volumens betragen kann. Damit einher geht die Entstehung von Eigenspannungen und Rissen, was in vielen Fällen mit Ausschuss gleichzusetzen ist.

Es ist daher Aufgabe der Erfindung, eine Fertigungsvorrichtung und ein Verfahren zum schichtweisen Fertigen von Objekten bereitzustellen, die bei einfachem Aufbau eine zuverlässige, kostengünstige und zeitsparende, schichtweise Fertigung von Objekten ermöglichen, welche mittels des erfindungsgemäßen Verfahrens auch mit großen Wandstärken und mit geringer Schrumpfung gefertigt werden können.

Die Lösung dieser Aufgabe erfolgt durch die Merkmale der unabhängigen Ansprüche. Die Unteransprüche haben bevorzugte Weiterbildungen der Erfindung zum Inhalt.

Wenn hierin physikalische Zustände von Materialien, Stoffen, Körpern oder Objekten beschrieben sind, wie beispielsweise "in flüssiger Form", und keine zugehörigen Temperaturangaben benannt werden, so ist eine Temperatur von 20°C anzunehmen, mit der Ausnahme, dass sich sinngemäß eine andere Temperatur oder ein anderer Temperaturbereich aus dem Zusammenhang oder dem Stand der Technik ableiten lässt.

Wenn hierin "unten" und "oben" genannt werden, so beschreibt das räumliche Zuordnungen. "Unten" ist dem Erdmittelpunkt näher als "oben". Eine "Unterseite" ist dem Erdmittelpunkt näher als eine "Oberseite".

Wenn hierin eine "Transferplattform" genannt wird, so ist ein strukturelles Element gemeint, welches bevorzugt zumindest eine ebene Oberfläche aufweist, die zur Aufnahme bzw. zum temporären Ablegen von mindestens einem chemischen Element (nachstehend erläuterte Schichten), insbesondere von einem Ausgangsmaterial des zu fertigenden Objekts, geeignet ist. Die Oberfläche kann dabei glatt, rau, strukturiert oder in einer anderen Gestaltung ausgebildet sein.

Wenn hierin eine "Transferplattformoberfläche" genannt wird, so ist diejenige Oberfläche einer "Transferplattform" gemeint, welche Eigenschaften aufweist, die zur Aufnahme und/oder Abgabe von dem mindestens einen chemischen Element, insbesondere von dem Ausgangsmaterial des zu fertigenden Objekts, geeignet ist. Eine "Transferplattformoberfläche" kann ein spezielles Material oder eine besondere Materialmatrix aufweisen, d.h. das Material der Transferplattformoberfläche kann sich vom Material der übrigen Teile der Transferplattform unterscheiden, kann in einer besonderen Oberflächenstruktur ausgebildet sein, kann mindestens eine spezielle Beschichtung aufweisen und/oder mit weiteren Eigenschaften ausgestattet sein, welche für das Verfahren und die Vorrichtung von Vorteil sind.

Eine "Ausbringeinheit" kann erfindungsgemäß jede Art von Anordnung sein, welche dazu ausgebildet ist, das mindestens eine chemische Element, insbesondere das Ausgangsmaterial des zu fertigenden Objekts, von einer ersten Position an eine weitere Position zu überbringen oder zu überführen, insbesondere von einer Ausgangsmaterialbevorratung auf eine Transferplattform bzw. auf eine Transferplattformoberfläche auszubringen.

Eine "Behandlungsschicht" kann ein chemisches Element oder ein Medium sein, welches dazu geeignet ist, gegenüber weiteren Elementen oder Medien besondere Eigenschaften aufzuweisen und/oder auszuüben. Solche Eigenschaften können beispielsweise hervorgerufen werden durch eine Fixierung und/oder Speicherung von Elementen, durch eine physikalische und/oder chemische Beeinflussung von Elementen, durch eine elektrische Beeinflussung von Elementen und/oder durch andere Wechselwirkungen von mindestens zwei Elementen, welche für das Verfahren und die Vorrichtung vorteilhaft sind. Bevorzugt liegt ein chemisches Element oder ein Medium einer "Behandlungsschicht" bei Temperaturen von 0°C bis 180°C zumindest teilweise in flüssiger Form vor, besonders bevorzugt bei Temperaturen zwischen 10°C und 120°C. Eine "Behandlungsschicht" oder Teile einer "Behandlungsschicht" weisen bevorzugt eine Siedetemperatur oder einen Siedebereich auf. Eine "Behandlungsschicht" kann mindestens ein Lösungsmittel umfassen. Eine "Behandlungsschicht" kann mindestens einen Feststoff in Pulverform, in Faserform, in Plättchenform oder als Nanopartikel umfassen. Eine "Behandlungsschicht" kann mindestens ein Polymer umfassen, welches bevorzugt in gelöster Form vorliegt. Eine "Behandlungsschicht" kann insbesondere vor dem Aufbringen auf eine Transferplattformoberfläche auch als "Behandlungsmittel" bezeichnet werden. Das Erzeugen einer "Behandlungsschicht" kann durch Aufbringen mehrerer gleicher oder unterschiedlicher "Behandlungsmittel" auf eine Transferplattformoberfläche gleichzeitig oder nacheinander erfolgen. "Behandlungsmittel" können vor dem Auftrag auf eine Transferplattformoberfläche erwärmt werden, bevorzugt auf eine Temperatur bis zu 250°C, besonders bevorzugt auf eine Temperatur bis zu 130°C, wie beispielsweise auf eine Temperatur bis zu 110°C.

Eine "Materialschicht" ist bevorzugt aus mindestens einem Festkörper, also aus einem Material im festen Aggregatszustand, gebildet oder umfasst mindestens einen solchen. Bevorzugt liegt eine "Materialschicht" in Form eines granularen Mediums vor. Solche granularen Medien können pulverförmig, stabförmig, blattförmig oder in anderen Formen ausgeführt sein. Sie können eine Größe im Nanometerbereich oder eine Größe bis zu einem Millimeter oder darüber aufweisen. Granulare Medien einer "Materialschicht" können unterschiedliche Materialien umfassen, eine unterschiedliche Größe und Form aufweisen und/oder mit einer Oberflächenbeschichtung versehen sein. Besonders bevorzugt liegt eine "Materialschicht" in Pulverform vor und wird gebildet aus mindestens einem Metall, mindestens einem Polymer, mindestens einem Glas und/oder mindestens einer Keramik.

Eine "Vormaterialschicht" beschreibt eine Kombination aus mindestens einer "Behandlungsschicht" und mindestens einer "Materialschicht". Auch eine Kombination einer "Materialschicht" und einer bereits teilweise verflüchtigten und/oder physikalisch und/oder chemisch veränderten "Behandlungsschicht" stellt erfindungsgemäß eine "Vormaterialschicht" dar.

Ein "Objekt" kann ein Teil oder eine Struktur in jeglicher Form und aus jeglichem Material sein, welches mit dem Verfahren und/oder der Vorrichtung dieser Erfindung gefertigt werden kann. Auch Teile oder Bereiche eines ganzen Bauteils oder einer Baugruppe sind erfindungsgemäß als "Objekt" zu verstehen. Alternativ kann ein solches Teil eines "Objekts" auch als "Objektteil" bezeichnet werden. Insbesondere ist ein "Objekt" zumindest zu großen Teilen bevorzugt aus einem Metall oder einem Polymermaterial gebildet oder umfasst bevorzugt größere Mengen eines derselben.

Wenn hierin eine "Bauplattform" genannt wird, so ist ein strukturelles Element gemeint, welches bevorzugt zumindest eine ebene Oberfläche aufweist. Eine "Bauplattform" ist zur Aufnahme bzw. zur Übernahme von Material, insbesondere von einer Materialschicht, geeignet, welches in Summe als Objekt bezeichnet werden kann. Die Oberfläche einer "Bauplattform" kann glatt, rau, strukturiert oder in einer anderen Gestaltung ausgebildet sein.

Die Lösung der Aufgabe erfolgt durch eine Fertigungsvorrichtung zum schichtweisen Fertigen von Objekten. Die Fertigungsvorrichtung weist zumindest eine Transferplattform mit einer Transferplattformoberfläche und zumindest eine Ausbringeinheit auf. Die Ausbringeinheit ist zum Aufbringen zumindest einer Behandlungsschicht und zumindest einer Materialschicht, welche zusammen eine Vormaterialschicht des Objektes bilden, auf die Transferplattformoberfläche ausgebildet. Dabei umfasst die Materialschicht insbesondere granulatförmiges und/oder pulverförmiges Material. Die durch die Ausbringeinheit auf die Transferplattformoberfläche aufgebrachte Vormaterialschicht erstreckt sich insbesondere in eine erste Richtung und in eine zweite Richtung. Die Behandlungsschicht und/oder die Materialschicht können insbesondere linienweise oder flächenweise aufgebracht werden. Hierbei ist insbesondere vorgesehen, dass das System aus Ausbringeinheit und Transferplattform zumindest zwei Freiheitsgrade aufweist, die eine Relativbewegung von Transferplattform und Ausbringeinheit entlang der besagten zwei Richtungen zulassen. Besonders vorteilhaft ist somit ein herkömmliches, additives Fertigungsverfahren durchführbar, um die Behandlungsschicht und/oder die Materialschicht auf der Transferplattformoberfläche herzustellen.

Die Fertigungsvorrichtung weist weiterhin eine Bauplattform auf. Diese ist ausgebildet zum Übernehmen zumindest der Materialschicht der Vormaterialschicht von der Transferplattform, so dass das Objekt auf der Bauplattform insbesondere in eine dritte Richtung schichtweise hergestellt wird. Die Bauplattform kann dabei insbesondere zum Übernehmen der Behandlungsschicht und der Materialschicht der Vormaterialschicht ausgebildet sein.

Vorteilhafterweise stehen die erste Richtung, die zweite Richtung und die dritte Richtung senkrecht zueinander.

Insbesondere wird die Vormaterialschicht auf der Transferplattformoberfläche mittels der zumindest einen Ausbringeinheit durch das Aufbringen zumindest einer Behandlungsschicht und zumindest einer Materialschicht mittels eines Binder-Jetting Verfahrens aufgetragen.

Die Ausbringeinheit ist insbesondere eingerichtet, die Behandlungsschicht gemäß einem vorgebbaren Muster auf die Transferplattformoberfläche aufzutragen. Dieses Muster entspricht im Wesentlichen der Geometrie oder Form der zu übernehmenden Schicht, insbesondere der daraus resultierenden Schicht des Objektes bzw. eines Objektteils des Objektes auf der Bauplattform. Nach dem Aufbringen der Materialschicht durch die Ausbringeinheit wird die Materialschicht mit der Behandlungsschicht (auf der Transferplattformoberfläche) verbunden, womit die Vormaterialschicht die vordefinierte Geometrie und Form der zu übernehmenden Schicht aufweist. Dabei kann, wie nachstehend mit Bezug auf das Fertigungsverfahren erläutert wird, die Behandlungsschicht vor oder nach dem Aufbringen der Materialschicht aufgetragen werden.

Bevorzugt wird die Materialschicht im Wesentlichen auf die gesamte Oberfläche der Transferplattformoberfläche aufgetragen. Die Materialschicht haftet nur an denjenigen Stellen an der Transferplattformoberfläche, welche Teilen des aufgetragenen Musters der Behandlungsschicht entsprechen. Mit anderen Worten haften Abschnitte der Materialschicht nicht an der Transferplattformoberfläche, welche nicht mit der Behandlungsschicht verbunden sind. In dem Fall, in dem die Materialschicht vor dem Aufbringen der Behandlungsschicht aufgetragen wird, haftet die Materialschicht erst dann an der Transferplattformoberfläche, wenn sie mit der Behandlungsschicht verbunden wird beziehungsweise sobald die Vormaterialschicht gebildet wird, also nach dem Aufbringen der Behandlungsschicht.

Vorteilhafterweise wird zum Übergeben der Schicht (Behandlungsschicht und/oder Materialschicht) von der Transferplattform an die Bauplattform die Transferplattform erwärmt. Gemäß einer weiteren Ausführungsform werden zum Übergeben der Schicht (Behandlungsschicht und/oder Materialschicht) von der Transferplattform an die Bauplattform die Transferplattform und die Bauplattform und/oder die auf der Bauplattform befindlichen Objektteile erwärmt, wobei die Transferplattform bevorzugt stärker (d.h. auf eine höhere Temperatur) erwärmt wird als die Bauplattform und/oder die auf der Bauplattform befindlichen Objektteile.

Vorteilhafterweise ist die Bauplattform entlang der dritten Richtung bewegbar, wobei ein Bewegen der Transferplattform und/oder der Ausbringeinheit entlang der dritten Richtung vorzugsweise nicht vorgesehen ist. Dadurch ist der Aufbau der Fertigungsvorrichtung vereinfacht.

Allerdings können die Transferplattform und/oder die Ausbringeinheit gemäß einer Ausführungsform entlang der dritten Richtung bewegbar sein. Dadurch können beispielsweise mehrere Vormaterialschichten übereinander auf die Transferplattformoberfläche aufgebracht werden und somit kann ein aus diesen mehreren Vormaterialschichten ausgebildetes Objektteil auf der Transferplattformoberfläche hergestellt werden. Hierbei ist der Freiheitsgrad in die dritte Richtung vorzugsweise relativ klein bzw. kurz (insbesondere im Vergleich zum Freiheitsgrad in die erste und/oder zweite Richtung), so dass insbesondere lediglich wenige Vormaterialschichten, bevorzugt nicht mehr als zehn Vormaterialschichten, besonders bevorzugt nicht mehr als fünf Vormaterialschichten übereinander auf die Transferplattformoberfläche aufgebracht werden können. Mit anderen Worten ist gemäß dieser Ausführungsform nicht vorgesehen, das Objekt als Ganzes auf der Transferplattform herzustellen, sondern lediglich ein Objektteil.

Unabhängig davon, ob ein Bewegen der Transferplattform und/oder der Ausbringeinheit entlang der dritten Richtung nicht vorgesehen ist oder ob ein Bewegen der Transferplattform und/oder der Ausbringeinheit entlang der dritten Richtung in einem - wie gerade eben beschrieben - vorzugsweise beschränkten Maße vorgesehen ist, erfolgt erfindungsgemäß kein Zusammensetzen des Objektes auf der Transferplattform im Sinne von herkömmlichen additiven Fertigungsverfahren, sondern werden jeweils neue Vormaterialschichten auf der Transferplattform gefertigt und zumindest die Materialschichten der Vormaterialschichten werden in einem sich anschließenden Schritt auf der Bauplattform zu dem Objekt zusammengesetzt. Damit ist insbesondere ermöglicht, auf Stützstrukturen zu verzichten. Außerdem kann die Fertigung parallel betrieben werden, indem mehrere Vormaterialschichten gleichzeitig oder zeitlich versetzt auf separaten Transferplattformen hergestellt werden. Dadurch lässt sich eine Fertigungsdauer für das Objekt erheblich verkürzen.

Des Weiteren ist die Möglichkeit einer gezielten Temperaturführung sowie Prozessführung gegeben. Beispielsweise kann eine Schmelztemperatur des zum Fertigen verwendeten Materials einfach und zuverlässig erreicht und gehalten werden. Damit kann auf einfache und zuverlässige Weise eine Festigkeit und/oder Anbindung zwischen den einzelnen Schichten optimiert werden. Auch das Abkühlen der Materialschicht(en) und/oder des Objekts kann somit sehr genau gesteuert oder geregelt werden, um auf diese Weise beispielsweise ein Kristallisationsverhalten gezielt zu beeinflussen oder zu verändern.

Eine Ausbringeinheit kann grundsätzlich für eine oder mehrere Transferplattformen verwendet werden. Insbesondere können zwei Ausbringeinheiten für eine oder mehrere Transferplattformen verwendet werden.

Bevorzugt weist die Fertigungsvorrichtung für jede Transferplattform eine Ausbringeinheit auf. Somit ist insbesondere eine Anzahl von Transferplattformen und Ausbringeinheiten identisch. Mit anderen Worten ist vorzugsweise jeder Transferplattform exakt eine Ausbringeinheit zugeordnet. Dabei ist die Ausbringeinheit eingerichtet, sowohl zumindest eine Behandlungsschicht als auch zumindest eine Materialschicht des insbesondere granulatförmigen und/oder pulverförmigen Materials auf die Transferplattformoberfläche der ihr zugeordneten Transferplattform aufzutragen.

Bevorzugt weist die Ausbringeinheit einen Piezo-Druckkopf und/oder einen sogenannten Recoater auf.

Besonders vorteilhaft ist es, wenn die Fertigungsvorrichtung für jede Transferplattform zumindest zwei Ausbringeinheiten aufweist. Mit anderen Worten sind dabei vorzugsweise jeder Transferplattform zumindest zwei Ausbringeinheiten zugeordnet. Besonders bevorzugt ist es, wenn jeder Transferplattform exakt zwei Ausbringeinheiten zugeordnet sind. Mit anderen Worten ist vorzugsweise die Anzahl von Ausbringeinheiten das Zweifache der Anzahl von Transferplattformen. Vorzugsweise weist dabei eine erste Ausbringeinheit pro Transferplattform einen Piezo-Druckkopf zum Aufbringen der zumindest einen Behandlungsschicht auf. Weiter bevorzugt weist dabei eine zweite Ausbringeinheit pro Transferplattform einen Recoater zum Aufbringen der zumindest einen Materialschicht auf.

Bevorzugt ist vorgesehen, dass die Bauplattform eine Bauplattformoberfläche aufweist. Die Bauplattform ist außerdem ausgebildet, zumindest die Materialschicht der Vormaterialschicht von der Transferplattform auf der Bauplattformoberfläche oder auf bereits auf der Bauplattformoberfläche vorhandene Objektteile des Objektes zu übernehmen. Die Objektteile des Objektes auf der Bauplattformoberfläche stellen insbesondere bereits übernommene und miteinander verbundene Objektschichten dar, die zuvor auf die Transferplattform aufgebracht und von der Bauplattformoberfläche übernommen wurden. Somit sind die Schritte des Herstellens der Vormaterialschicht und des Verbindens der Vormaterialschicht mit anderen Schichten zu einem Objektteil voneinander getrennt. Dies vereinfacht die Durchführung der jeweiligen Schritte, da diese stets auf die eigenen Anforderungen hin optimiert werden können, wobei Wechselwirkungen keine große Rolle mehr spielen und damit nahezu unberücksichtigt bleiben können.

Die Transferplattform und die Bauplattform sind besonders vorteilhaft jeweils derart ausgebildet, dass eine Haftfähigkeit der zu übertragenden Schicht (d.h. der Vormaterialschicht oder der Behandlungsschicht oder der Materialschicht) und/oder bereits vorhandener Objektteile des Objektes an der Bauplattform höher ist als an der Transferplattform.

Dies lässt sich bevorzugt durch eine jeweilige Oberflächenbeschaffenheit und/oder durch eine jeweilige Beschichtung und/oder durch eine jeweilige Materialwahl für die jeweiligen Plattformen erreichen. Die Beschichtung kann beispielsweise Polytetrafluorethylen (PTFE) und/oder Perfluor(ethylen-propylen) (PFEP) sein.

Die Transferplattform kann bevorzugt Keramik umfassen oder aus Keramik gebildet sein. Die Bauplattform kann bevorzugt ein Metall umfassen oder aus Metall gebildet sein. Diese Materialbeispiele können insbesondere bei der Verwendung von Metallen als Bestandteil der Vormaterialschicht oder der Behandlungsschicht oder der Materialschicht verwendet werden.

Auch kann durch unterschiedliche Temperaturführung der Plattformen eine unterschiedliche Haftfähigkeit erreicht werden. Durch die unterschiedlichen Haftfähigkeiten ist eine Übergabe der Schicht von der Transferplattform an die Bauplattform einfach und schnell möglich.

Vorteilhafterweise ist die Bauplattformoberfläche während des Übernehmens zumindest der Materialschicht der Vormaterialschicht von der Transferplattform im Wesentlichen parallel zu der Transferplattformoberfläche ausgerichtet. Somit ist eine einfache Übergabe der Schicht ermöglicht. Insbesondere lassen sich dabei die beiden Plattform-Oberflächen unmittelbar gegenüberliegend anordnen, so dass die zu übergebende Schicht sowohl Kontakt zur Transferplattformoberfläche als auch Kontakt zur Bauplattformoberfläche oder zu auf der Bauplattformoberfläche angeordneten Objektteilen aufweisen kann.

Vorzugsweise umfasst die Fertigungsvorrichtung zumindest eine Drehvorrichtung. Die Drehvorrichtung ist dabei eingerichtet, die zumindest eine Transferplattform zu drehen. Dabei ist insbesondere eine Drehvorrichtung pro Transferplattform vorgesehen. In manchen Ausführungsformen sind alle Transferplattformen gemeinsam mit einer einzigen Drehvorrichtung verbunden, welche alle Transferplattformen gleichzeitig dreht. Dabei ist die Drehvorrichtung insbesondere eingerichtet, die jeweilige oder alle Transferplattformen bevorzugt um eine Achse im Wesentlichen parallel zur ersten Richtung und/oder um eine Achse im Wesentlichen parallel zur zweiten Richtung und/oder um eine Achse im Wesentlichen parallel zur dritten Richtung zu drehen. Durch das Drehen der Transferplattform mittels der Drehvorrichtung kann überschüssiges Material der Materialschicht, welches nicht mit der Behandlungsschicht verbunden ist, von der Transferplattformoberfläche entfernt werden.

Durch das Drehen der Transferplattform mittels der Drehvorrichtung werden insbesondere diejenigen Abschnitte der Materialschicht entfernt, welche nicht mit der Behandlungsschicht verbunden sind. Besonders bevorzugt ist dabei, dass die Transferplattform um eine Achse im Wesentlichen parallel zu der ersten und/oder zu der zweiten Richtung gedreht wird. Dabei kann die Transferplattform insbesondere um einen Winkel größer als 90°, bevorzugt um 100°, besonders bevorzugt um 100° bis 180° gedreht werden. Mit anderen Worten kann die Transferplattform besonders bevorzugt umgedreht werden, so dass die in eine erste Raumrichtung (zum Beispiel nach oben) zeigende Transferplattformoberfläche nach dem Drehen in eine zur ersten Raumrichtung entgegengesetzte zweite Raumrichtung (zum Beispiel nach unten) zeigt. Nach dem Herunterfallen des überschüssigen Materials der Materialschicht dreht die Drehvorrichtung die Transferplattform(en) wieder in die Ausgangslage zurück. In einer besonderen Ausführungsform kann die Transferplattform mittels der Drehvorrichtung um 360° gedreht werden.

Die Drehvorrichtung ist insbesondere dazu eingerichtet, die Transferplattform(en) während des Aufbringens der Behandlungsschicht und/oder der Materialschicht zu drehen. Dabei wird insbesondere eine Bewegung der Ausbringeinheit(en) mit einer Drehung der Transferplattform(en) kombiniert, um das vorgegebene Muster herzustellen bzw. aufzutragen. Dabei wird die zumindest eine Transferplattform bevorzugt um die Achse parallel zur dritten Richtung gedreht. Alternativ oder zusätzlich dazu kann die zumindest eine Transferplattform bevorzugt um die Achse parallel zur ersten und/oder um die Achse parallel zur zweiten Richtung gedreht beziehungsweise geneigt werden.

Vorzugsweise umfasst die Fertigungsvorrichtung zumindest eine Reinigungsvorrichtung, welche eingerichtet ist, durch Ansaugen und/oder Abblasen eines Fluides überschüssiges Material der Materialschicht von der zumindest einen Transferplattform und/oder der Bauplattform zu entfernen. Bevorzugt ist die Reinigungsvorrichtung eine Gebläsevorrichtung, welche Gas und/oder Nebel und/oder Dampf ansaugt und/oder abbläst. Alternativ oder zusätzlich dazu kann das Fluid ein Lösungsmittel sein oder umfassen, welches insbesondere nicht dem Material der der Behandlungsschicht entspricht.

Besonders bevorzugt umfasst die Fertigungsvorrichtung eine Mehrzahl von Reinigungsvorrichtungen. Insbesondere weist die Fertigungsvorrichtung eine der Anzahl an Transferplattformen entsprechende Anzahl an Reinigungsvorrichtungen auf. Des Weiteren weist die Fertigungsvorrichtung bevorzugt eine einzige Reinigungsvorrichtung auf, welche eine der Anzahl der Transferplattformen entsprechende Anzahl von Eintritts- und/oder Austrittsdüsen aufweist. Besonders bevorzugt umfasst die Fertigungsvorrichtung zwei Reinigungsvorrichtungen, wobei insbesondere jede der zwei Reinigungsvorrichtungen eine der Anzahl der Transferplattformen entsprechende Anzahl an Düsen aufweist. Dabei ist eine der beiden Reinigungsvorrichtungen zum Abblasen eines Fluides eingerichtet und die zweite der beiden Reinigungsvorrichtungen zum Ansaugen eines Fluides eingerichtet. Insbesondere kann dabei die erste Reinigungsvorrichtung bzw. können die Austrittsdüsen der ersten Reinigungsvorrichtung entlang der dritten Richtung oberhalb der jeweiligen Transferplattform angeordnet sein. Insbesondere kann dann die zweite Reinigungsvorrichtung bzw. können dann die Eintrittsdüsen der zweiten Reinigungsvorrichtung entlang der dritten Richtung unterhalb der jeweiligen Transferplattform angeordnet sein.

Vorzugsweise umfasst die Fertigungsvorrichtung zumindest eine Schwingungserzeugungsvorrichtung. Die Schwingungserzeugungsvorrichtung ist eingerichtet, mittels Schall, insbesondere Ultraschall, und/oder mittels Vibrationen überschüssiges Material der Materialschicht von der zumindest einen Transferplattform und/oder der Bauplattform zu entfernen.

Die Fertigungsvorrichtung weist insbesondere eine Schwingungserzeugungsvorrichtung pro Transferplattform auf. Vorzugsweise weist die Fertigungsvorrichtung eine einzige Schwingungserzeugungsvorrichtung auf, welche eingerichtet ist, überschüssiges Material der Materialschicht von allen Transferplattformen zu entfernen. Bevorzugt weist die Fertigungsvorrichtung eine weitere Schwingungserzeugungsvorrichtung auf, welche eingerichtet ist, überschüssiges Material von der Bauplattform zu entfernen.

Vorzugsweise ist die Schwingungserzeugungsvorrichtung eine Ultraschallerzeugungsvorrichtung und ist die Ultraschallerzeugungsvorrichtung eingerichtet, die Bauplattform und/oder die Transferplattform mittels Ultraschall zu erwärmen.

In bestimmten Ausführungsformen wird die Materialschicht oder ein Teil der Materialschicht vor dem Aufbringen durch ein Wirbelschichtverfahren aufbereitet. In einer solchen Ausführungsform wird das bevorzugt granulat-, stäbchen- und/oder pulverförmige Material in einem mit der Ausbringeinheit verbundenen Vorratsbehälter gelagert, in welchem das Material von unten (also ausgehend von einem Boden des Vorratsbehälters) mit einem Gas, einem Schutzgas oder Luft beaufschlagt wird. Durch ein durch das besagte Beaufschlagen vermitteltes Aufwirbeln des Materials verhalten sich granulat-, stäbchen- und/oder pulverförmige Medien ähnlich wie Flüssigkeiten. Das aufgewirbelte Material wird dann mittels der Ausbringeinheit(en) auf die Transferplattform aufgebracht.

Vorzugsweise umfasst die Fertigungsvorrichtung zumindest eine Faser-Beaufschlagungsvorrichtung. Die Faser-Beaufschlagungsvorrichtung ist eingerichtet, die Vormaterialschicht, insbesondere die Materialschicht der Vormaterialschicht, auf der Transferplattform und/oder Objektteile des Objektes auf der Bauplattform zumindest teilweise mit Fasern zu beaufschlagen. Vorzugsweise umfasst die Fertigungsvorrichtung eine Faser-Beaufschlagungsvorrichtung pro Transferplattform. Vorzugsweise umfasst die Fertigungsvorrichtung eine weitere Faser-Beaufschlagungsvorrichtung für die Bauplattform.

Vorzugsweise ist die Faser-Beaufschlagungsvorrichtung beispielsweise ein Recoater mit drehbar gelagerten Walzen. Die im Betriebszustand der Faser-Beaufschlagungsvorrichtung sich drehenden Walzen beschleunigen dabei Fasern, insbesondere Kurzfasern, in Richtung der Transferplattform, um die Vormaterialschicht, insbesondere die Materialschicht, zumindest teilweise mit Fasern zu beaufschlagen und/oder in Richtung der Bauplattform, um Objektteile des Objektes auf der Bauplattform zumindest teilweise mit Fasern zu beaufschlagen.

Die Fasern bzw. die Kurzfasern sind vorzugsweise Kohlenstofffasern. Die Fasern weisen dabei vorzugsweise eine Länge von bis zu einigen Millimetern auf. Gemäß einer alternativen Ausführungsform weisen die Fasern vorzugsweise eine Länge von weniger als 1 mm auf.

Die vorgenannten Fasern weisen dabei den Vorteil auf, dass sie eine Bindung der Objektteile des Objektes, insbesondere der zu übertragenden Schicht mit den bereits vorhandenen Objektteilen des Objektes auf der Bauplattformoberfläche, in der dritten Richtung vorteilhafterweise erhöhen. Mittels der Faser-Beaufschlagungsvorrichtung können Kurzfasern zusätzlich zu Fasern eingebracht werden, welche vor dem Einbringen der Kurzfasern bereits in der Materialschicht vorhanden sind.

Alternativ oder zusätzlich zu den vorstehend erläuterten Walzen der Faser-Beaufschlagungsvorrichtung ist die Faser-Beaufschlagungsvorrichtung bevorzugt eingerichtet, die Kurzfasern mittels eines Materialstroms in Richtung der Transferplattform und/oder der Bauplattform zu beschleunigen. Dabei kann der Materialstrom beispielsweise ein Fluidstrom, insbesondere ein Gas- bzw. Luftstrom sein. Durch den beschleunigenden Materialstrom können die Fasern entlang des Materialstroms ausgerichtet werden. Somit lässt sich ein Aufprallwinkel zwischen einer Längsachse der Fasern und der Oberfläche der Vormaterialschicht auf der Transferplattform und/oder der Objektteile des Objektes auf der Bauplattform einstellen, beispielsweise auf 10° bis 90°, vorzugsweise annähernd auf 90°. Hierbei und im Folgenden bedeutet "annähernd" insbesondere eine Abweichung um einen Winkelbereich von +/-10°, bevorzugt von +/-5°. Beispielsweise bedeutet "annähernd 90°" einen Winkelbereich zwischen und einschließlich 80° und 110°, bevorzugt zwischen und einschließlich 85° und 95°. Dadurch ist ein möglichst tiefes Eindringen der Fasern in das entsprechende Material gewährleistet.

Besonders bevorzugt dringen die dem entsprechenden Material (der Vormaterialschicht bzw. der Objektteile des Objektes) zugewandten ersten Faserenden mindestens 100 µm in das entsprechende Material ein. Bevorzugt werden die den ersten Faserenden abgewandten zweiten Faserenden, welche aus der Vormaterialschicht bzw. der Materialschicht auf der Transferplattform herausragen, beim Übergeben der Vormaterialschicht bzw. der Materialschicht an die Bauplattform in die auf der Bauplattformoberfläche bereits vorhandenen Objektteile des Objektes eingeführt.

Das Eindringverhalten der Fasern in die Vormaterialschicht bzw. die Materialschicht sowie in die Objektteile des Objektes kann durch eine Temperierung des jeweiligen Materials (in welches die Fasern eindringen) angepasst werden. So führt eine höhere Temperatur der Vormaterialschicht, der Materialschicht und/oder der Objektteile des Objekts bevorzugt zu einem tieferen Eindringen der Fasern bei anderweitig gleichen oder im Wesentlichen gleichen Prozess-Parametern. Alternativ oder zusätzlich kann auch eine Temperierung der Fasern und/oder eines Materialstroms zur Beschleunigung der Fasern erfolgen. Dies kann ebenfalls Auswirkungen auf das Eindringverhalten der Fasern haben. Bevorzugt weisen die Fasern und/oder ein besagter Materialstrom in Abhängigkeit vom verwendeten Material der Materialschicht eine Temperatur über 150°C auf, besonders bevorzugt eine Temperatur über 200°C.

Fasern, welche in einem flachen Winkel, beispielsweise zwischen und einschließlich 0° und 45°, zur Oberfläche der Vormaterialschicht auf Transferplattform und/oder der Objektteile des Objektes auf der Bauplattform auftreffen, bleiben in Abhängigkeit von den Temperaturen größtenteils an der entsprechenden Oberfläche haften beziehungsweise dringen nicht bis kaum in diese ein. Diese Fasern können dann mittels der Reinigungsvorrichtung und/oder mittels der Schwingungserzeugungsvorrichtung von der entsprechenden Oberfläche entfernt werden.

In einer alternativen Ausführungsform weist eine Fertigungsvorrichtung zumindest eine Faser-Beaufschlagungsvorrichtung, zumindest eine Transferplattform, zumindest eine Ausbringeinheit zum Aufbringen zumindest einer Schicht des Objektes und eine Bauplattform auf. Die Ausbringeinheit bringt die zumindest eine Schicht des Objektes insbesondere linienweise auf eine Transferplattformoberfläche der Transferplattform auf, wobei sich die Schicht in eine erste Richtung und in eine zweite Richtung erstreckt. Die Bauplattform ist dabei zum Übernehmen der Schicht von der Transferplattform ausgebildet, so dass das Objekt in eine dritte Richtung schichtweise hergestellt wird. Dabei ist die zumindest eine Faser-Beaufschlagungsvorrichtung eingerichtet, die Schicht auf der Transferplattformoberfläche und/oder bereits auf der Bauplattformoberfläche vorhandene Objektteile des Objektes mit Fasern zu beaufschlagen.

Hierbei ist die zumindest eine Ausbringeinheit bevorzugt ein Extruder, welcher insbesondere zum Extrudieren eines thermoplastischen Materials ausgebildet ist.

Die Ausbringeinheit arbeitet hierbei besonders vorteilhaft nach einem sogenannten "Fused Filament Fabrication (FFF)"-Verfahren (FFF-Verfahren).

In einer besonders vorteilhaften Variante kann die Ausbringeinheit unterschiedliche Materialien auf die Transferplattform aufbringen.

Vorteilhafterweise weist die Fertigungsvorrichtung gemäß den vorstehenden Ausführungen eine Vielzahl von Transferplattformen auf, wobei bevorzugt jeder Transferplattform zumindest eine eigene Ausbringeinheit zugeordnet ist.

Dies ermöglicht ein paralleles Fertigen des Objektes, indem mehrere Vormaterialschichten unabhängig voneinander gefertigt werden können. Die Bauplattform ist in diesem Fall eingerichtet, zumindest die Materialschicht der Vormaterialschicht in einer vorgebbaren Reihenfolge von den Transferplattformen zu übernehmen, um das Objekt herzustellen. Somit können insbesondere auch große und/oder komplexe Objekte schnell gefertigt werden. Weiter ist bevorzugt vorgesehen, dass unterschiedliche Ausbringeinheiten vorhanden sind, so dass einzelne Transferplattformen mit verschiedenen Materialien bedruckbar/beaufschlagbar sind. Dies bedeutet, dass Schichten aus unterschiedlichen Materialien, beispielsweise mittels verschiedener Materialschichten und/oder verschiedener Behandlungsschichten, auf die Transferplattformen aufgebracht werden können. So lassen sich mechanische Eigenschaften des herzustellenden Objektes, wie eine gezielte Masseverteilung oder eine definierte lokale Steifigkeit beeinflussen. Auch lassen sich hierüber definierte Fähigkeiten hinsichtlich Wärmeleitung oder elektrischer Leitfähigkeit einstellen. Ebenso können einfach und aufwandsarm sensorische und/oder aktorische Funktionen integriert werden.

Besonders vorteilhaft ist es, wenn zumindest eine Ausbringeinheit eingerichtet ist, die Schicht auf der Transferplattform mittels des Binder-Jetting Verfahrens herzustellen und zumindest eine weitere Ausbringeinheit eingerichtet ist, die Schicht auf der gleichen oder einer anderen Transferplattform mittels des FFF-Verfahrens (Extruder) herzustellen.

Durch die Möglichkeit, die Bauplattform zu verfahren, um Schichten von der Transferplattform bzw. von den Transferplattformen zu übernehmen, ist ebenso die Möglichkeit geschaffen, Zusatzkomponenten aufzunehmen. Somit kann insbesondere ein Versteifungselement in ein bereits gefertigtes Objektteil eingefügt, beispielsweise eingepresst, werden. Durch nachfolgende Übernahmen weiterer Schichten kann das eingesetzte Versteifungselement verdeckt werden.

Vorteilhafterweise kann die Fertigungsvorrichtung auch eine Mehrzahl von Bauplattformen aufweisen. Auf diese Weise können beispielsweise zwei oder mehrere Objekte und/oder Objektteile parallel beziehungsweise gleichzeitig gefertigt werden. Hierbei kann insbesondere bei einer Multimaterialanordnung oder Hybridmaterialanordnung beispielsweise mit dem Aufbringen einer Schicht eines ersten Objektteils aus einem ersten Material auf einer ersten Bauplattform begonnen werden. Wenn daraufhin auf das erste Objektteil eine weitere Schicht aus einem weiteren Material aufgetragen werden soll, kann währenddessen auf ein zweites Objektteil auf einer zweiten Bauplattform parallel eine Schicht aus dem ersten Material aufgetragen werden. Dadurch können zwei oder mehrere Objekte bzw. Objektteile schnell und effizient gefertigt werden, insbesondere bei Multimaterialanordnungen oder Hybridmaterialanordnungen.

Vorteilhafterweise umfasst die Fertigungsvorrichtung zumindest eine Energie-Beaufschlagungsvorrichtung. Die Energie-Beaufschlagungsvorrichtung ist dazu eingerichtet, der Behandlungsschicht und/oder der Materialschicht und/oder den Objektteilen des Objektes Energie zuzuführen. Bevorzugt ist die Energie-Beaufschlagungsvorrichtung eingerichtet, der (den) Transferplattform(en) und/oder der Bauplattform Energie zuzuführen.

Die Energie-Beaufschlagungsvorrichtung ist insbesondere zum Erwärmen der Behandlungsschicht und/oder der Materialschicht und/oder der Objektteile des Objektes eingerichtet. Dabei kann die Energie-Beaufschlagungsvorrichtung die vorgenannten Schichten und/oder Objektteile des Objektes direkt erwärmen und/oder indirekt mittels einer Erwärmung der Transferplattform(en) und/oder der Bauplattform erwärmen. Die Behandlungsschicht und/oder die Materialschicht können hierbei insbesondere vor und/oder nach dem Aufbringen derselben erwärmt werden. Hierfür ist oder umfasst die Energie-Beaufschlagungsvorrichtung bevorzugt zumindest eine Erwärmungsvorrichtung.

Die Energie-Beaufschlagungsvorrichtung ist insbesondere eingerichtet, die Behandlungsschicht der Vormaterialschicht zu erwärmen und insbesondere zu verdunsten oder zu verdampfen. Nach dem Verdunsten oder Verdampfen verbleibt im Wesentlichen lediglich die Materialschicht auf der Transferplattform. Dadurch ist es möglich, lediglich die Materialschicht an die Bauplattform zu übergeben.

Die Energie-Beaufschlagungsvorrichtung ist insbesondere eingerichtet, die Materialschicht zu plastifizieren und/oder zu schmelzen.

Die Fertigungsvorrichtung umfasst insbesondere eine Energie-Beaufschlagungsvorrichtung für die Bauplattform und eine Energie-Beaufschlagungsvorrichtung für alle Transferplattformen oder für jede Transferplattform.

Vorteilhafterweise ist die Energie-Beaufschlagungsvorrichtung, insbesondere jede Energie-Beaufschlagungsvorrichtung, eingerichtet, die Transferplattform und/oder die Bauplattform mittels Induktion und/oder Mikrowellen mit Energie zu beaufschlagen, insbesondere zu erwärmen. Die Energie-Beaufschlagungsvorrichtung für die Bauplattform ist vorzugsweise eingerichtet, direkt die bereits auf der Bauplattformoberfläche vorhandenen Objektteile des Objektes mit Energie zu beaufschlagen, insbesondere zu erwärmen, beispielsweise mittels Induktion oder Mikrowellen. Alternativ oder zusätzlich dazu kann die Energie-Beaufschlagungsvorrichtung für die Bauplattform die Bauplattform direkt erwärmen, beispielsweise mittels Induktion.

Vorteilhafterweise ist die Energie-Beaufschlagungsvorrichtung, insbesondere jede Energie-Beaufschlagungsvorrichtung eingerichtet, die Transferplattform und/oder die Bauplattform, insbesondere die Schicht(en) und/oder die Objektteile des Objektes, durch einen direkten Stromfluss (Gleichstrom oder Wechselstrom) mit Energie zu beaufschlagen, insbesondere zu erwärmen und/oder zu verschweißen. Dies kann insbesondere mit der vorstehend erwähnten Möglichkeit der Induktion kombiniert werden.

Die Energie-Beaufschlagungsvorrichtung ist insbesondere eingerichtet, die gesamte Fertigungsvorrichtung zu erwärmen (globale Erwärmung).

Für hochschmelzende Pulver oder Granulate als Material der Materialschicht weist die Transferplattform in bestimmten Ausführungsformen eine hohe Wärmeableitung auf und ist beispielsweise zumindest in Teilen aus Kupfer gebildet. Bevorzugt können als Material für die Transferplattform oder für Teile der Transferplattform auch Keramiken verwendet werden, wie beispielsweise Aluminiumoxid, Aluminiumtitanat, Aluminiumnitrid, Siliziumcarbid, Dispersionskeramik oder Silizium-Aluminiumoxid-Nitrid oder eine Kombination von mindestens zwei der genannten.

Besonders bevorzugt weist die Fertigungsvorrichtung eine Kühlvorrichtung auf, mit welcher die Transferplattform und/oder die Bauplattform gekühlt werden können. Die Kühlvorrichtung kann insbesondere eine Gaskühlung und/oder eine Kühlflüssigkeitskühlung sein. Die Transferplattform kann insbesondere einen Kühlkörper, vorzugsweise an einer Unterseite gegenüber von der Transferplattformoberfläche, aufweisen.

Die Fertigungsvorrichtung weist bevorzugt eine Zerspanungseinheit auf, die zum zerspanenden Bearbeiten von auf die Bauplattform aufgebrachten Objektteilen des Objektes vorgesehen ist. Bei der Zerspanungseinheit handelt es sich bevorzugt um eine Fräseinheit, eine Schleifeinheit oder eine Bohreinheit. Die Zerspanungseinheit ermöglicht ein Bearbeiten des Objektes bzw. von Teilen davon in einem teilfertigen Zustand, sodass auch solche Stellen bearbeitet werden können, die am fertigen Objekt nur schwer oder gar nicht mehr zugänglich sind. Besonders vorteilhaft kann die Bearbeitung mittels der Zerspanungseinheit außerdem in Zeitspannen durchgeführt werden, in denen auf die Fertigstellung einer weiteren, zu übernehmenden Schicht auf der Transferplattform gewartet wird.

Die Zerspanungseinheit ist insbesondere eingerichtet, aus den Objektteilen des Objektes herausragende Fasern, welche mittels der Faser-Beaufschlagungsvorrichtung in die Schichten und/oder direkt in die Objektteile eingeführt wurden, zu zerspanen.

Die Transferplattform weist bevorzugt ein Folienelement und eine das Folienelement aufnehmende Halteplatte auf. Das Folienelement bildet bevorzugt die Transferplattformoberfläche. Anstelle eines Folienelements kann auch eine dünne Platte verwendet werden, wie beispielsweise eine Karbonplatte oder eine andere faserverstärkte Platte mit einer Stärke kleiner oder gleich 2 mm, bevorzugt kleiner oder gleich 1 mm und besonders bevorzugt kleiner oder gleich 0,5 mm. Es ist außerdem bevorzugt vorgesehen, dass das Folienelement oder die dünne Platte zum Lösen einer darauf aufgebrachten Schicht zumindest bereichsweise von der Halteplatte abhebbar ist. Dadurch lässt sich die Schicht von dem Folienelement oder von der dünnen Platte abschälen, wodurch eine Belastung der Schicht beim Lösen von der Transferplattform minimiert ist. Dies minimiert das Risiko einer Beschädigung der Schicht und reduziert somit die Ausschussrate. Besonders vorteilhaft liegt das Folienelement oder die dünne Platte während des Aufbringens der Materialschicht und der Behandlungsschicht auf die Transferplattformoberfläche unmittelbar an der Halteplatte an, so dass das Folienelement oder die dünne Platte wie eine Transferplattformoberfläche wirkt. Zum Ablösen der Vormaterialschicht, insbesondere nach dem Entfernen überschüssigen Materials der Materialschicht, von der Transferplattformoberfläche lässt sich das Folienelement oder die dünne Platte bereichsweise von der Halteplatte abheben, so dass ein Abschälen der Vormaterialschicht von dem Folienelement oder von der dünnen Platte, beispielsweise ausgehend von einem Rand der Vormaterialschicht, erfolgt. Das Folienelement ist bevorzugt aus Polyimid gebildet und kann unterschiedliche Oberflächenrauigkeiten und/oder Oberflächenstrukturen aufweisen. Die dünne Platte ist bevorzugt aus mindestens einem Polymer gebildet, ist bevorzugt mit Fasern oder anderen Stoffen verstärkt und/oder weist bevorzugt unterschiedliche Oberflächenrauigkeiten und/oder Oberflächenstrukturen auf.

Vorteilhafterweise weist die Transferplattform Oberflächenstrukturen zur Vergrößerung der Transferplattformoberfläche auf. Diese Oberflächenstrukturen können insbesondere Pyramiden, Stege oder ähnliche von der Oberfläche hervorkragende Strukturen sein. Wird eine Schicht auf diese Oberflächenstrukturen aufgebracht, so zeichnen sich die Konturen der Oberflächenstrukturen auch auf der diesen abgewandten (gegenüberliegenden) Seite der Schicht ab. Die Schicht kann daher beim Übergeben an die Bauplattform besonders zuverlässig mit ebendieser oder mit auf der Bauplattform vorhandenen Objektteilen des Objektes verbunden werden. Dadurch ist wiederum ein optimaler Halt zwischen aufeinanderfolgenden Schichten und damit eine verbesserte Integrität des Objektes, vor allem in Schichtdickenrichtung, erreicht.

Die Erfindung betrifft außerdem ein Verfahren zum schichtweisen Fertigen von Objekten. Das Verfahren weist die folgenden Schritte auf:
Aufbringen zumindest einer Behandlungsschicht auf zumindest eine Transferplattform mittels einer Ausbringeinheit. Dabei erstreckt sich die Behandlungsschicht insbesondere in eine erste Richtung und in eine zweite Richtung. Vor oder nach dem Aufbringen der zumindest einen Behandlungsschicht wird zumindest eine Materialschicht auf die Transferplattform aufgebracht. Die Materialschicht umfasst insbesondere granulatförmiges und/oder pulverförmiges Material.

Durch eine Verbindung der Behandlungsschicht mit der Materialschicht bilden diese eine Vormaterialschicht des Objektes. Als nächstes wird zumindest die Materialschicht der Vormaterialschicht von der Transferplattform an eine Bauplattform insbesondere entlang einer dritten Richtung übergeben. Dabei kann insbesondere auch die Behandlungsschicht an die Bauplattform übergeben werden. Die Schritte des Aufbringens der zumindest einen Behandlungsschicht und der zumindest einen Materialschicht und des Übergebens werden wiederholt, so dass das Objekt auf der Bauplattform insbesondere in die dritte Richtung schichtweise hergestellt wird. Beim Wiederholen des Übergebens kann die bei dieser Wiederholung zu übergebende Schicht an eine Bauplattformoberfläche der Bauplattform (Stellen, an welchen noch keine Schicht vorhanden ist) und/oder an Objekteile des Objekts übergeben werden, welche bereits durch vorheriges Übergeben von Schicht(en) auf der Bauplattform vorhanden sind bzw. gebildet wurden.

Dabei wird die zuerst aufgebrachte Schicht, also entweder die Behandlungsschicht oder die Materialschicht, auf eine Transferplattformoberfläche der entsprechenden Transferplattform aufgebracht. Die daraufhin aufgebrachte Schicht wird auf die zuerst aufgebrachte Schicht sowie gegebenenfalls nicht bedeckte Abschnitte der Transferplattformoberfläche aufgebracht.

Vorzugsweise wird die Behandlungsschicht, unabhängig davon, ob sie vor oder nach der Materialschicht auf die Transferplattform aufgebracht wird, gemäß einem vorgebbaren Muster auf die Transferplattform aufgebracht. Dieses vorgebbare Muster der Behandlungsschicht entspricht den Dimensionen und der Geometrie der herzustellenden Schicht des Objektes.

Bevorzugt wird im Wesentlichen die gesamte Oberfläche der Transferplattform mit der Materialschicht beaufschlagt.

Das Material der Materialschicht umfasst bevorzugt Polymere und/oder Metalle. In weiteren Ausgestaltungen der Erfindung kann das Material der Materialschicht aus Keramik oder Glas bestehen oder diese umfassen.

Vorzugsweise wird nach dem Aufbringen der Behandlungsschicht und der Materialschicht auf die Transferplattform das überschüssige Material der Materialschicht, welches nicht mit der Behandlungsschicht verbunden ist, entfernt. Bevorzugt weist das Verfahren hierfür einen Reinigungsschritt nach dem Aufbringen der Behandlungsschicht und nach dem Aufbringen der Materialschicht auf, bei welchem überschüssiges Material der Materialschicht von der Transferplattform entfernt wird. Der Reinigungsschritt umfasst bevorzugt ein Drehen der zumindest einen Transferplattform mittels der zumindest einen Drehvorrichtung und/oder ein Ansaugen und/oder Abblasen eines Fluides mittels der zumindest einen Reinigungsvorrichtung und/oder ein Entfernen überschüssigen Materials der Materialschicht mittels Schall und/oder mittels Vibration mittels der zumindest einen Schwingungserzeugungsvorrichtung.

In dem Fall, in welchem der Reinigungsschritt das Ansaugen und/oder Abblasen eines Fluides umfasst, werden bevorzugt Gase und/oder Dämpfe der Behandlungsschicht, insbesondere der verdampfenden und/oder verdunstenden Behandlungsschicht, angesaugt und/oder abgeblasen, insbesondere zusätzlich oder alternativ zum angesaugten und/oder abgeblasenen Material der Materialschicht.

Der Reinigungsschritt wird insbesondere nach dem Aufbringen der Behandlungsschicht und der Materialschicht (unabhängig von der Reihenfolge des Aufbringens dieser beiden Schichten) und vor dem Übergeben der Materialschicht oder der Vormaterialschicht an die Bauplattform durchgeführt.

Das Übergeben der Materialschicht und der Behandlungsschicht oder nur der Materialschicht (im Folgenden "die zu übergebende Schicht" oder "die Schicht") von der Transferplattform an die Bauplattform weist bevorzugt die folgenden Teilschritte auf: Zunächst erfolgt ein relatives Annähern der Transferplattform und der Bauplattform. Insbesondere wird hierdurch erreicht, dass die Schicht sowohl in Kontakt mit der Transferplattform als auch in Kontakt mit der Bauplattform, insbesondere mit bereits auf der Bauplattform vorhandenen Objektteilen des Objektes, steht. Danach kann ein Pressen der zu übertragenden Schicht auf der Transferplattformoberfläche gegen die Bauplattformoberfläche der Bauplattform oder gegen bereits auf der Bauplattformoberfläche vorhandene Objektteile des Objektes erfolgen. Vorzugsweise wird die Presskraft von der Bauplattform auf die Schicht ausgeübt. Durch das Pressen wird eine Haftung der Schicht an der Bauplattformoberfläche und/oder an den besagten Objektteilen des Objektes verbessert. Schließlich erfolgt ein Ablösen der Schicht von der Transferplattformoberfläche. Die Transferplattformoberfläche steht somit für ein Aufbringen einer weiteren Vormaterialschicht zur Verfügung.

Bei der Übertragung der zu übertragenden Schicht auf die Bauplattform muss keine, insbesondere keine hohe, Presskraft angewandt werden. Alternativ zum Pressen kann die Übertragung durch ein bloßes In-Kontakt-Bringen der zu übertragenden Schicht mit der Bauplattformoberfläche oder mit den Objektteilen des Objektes auf der Bauplattform erfolgen.

Besonders bevorzugt weist das Verfahren einen ersten Energie-Beaufschlagungsschritt vor und/oder während und/oder nach dem Aufbringen der Behandlungsschicht und/oder vor und/oder während und/oder nach dem Aufbringen der Materialschicht auf.

Der erste Energie-Beaufschlagungsschritt und/oder die nachfolgend genannten weiteren Energie-Beaufschlagungsschritte kann/können bevorzugt mittels einer Erwärmungsvorrichtung zur Beaufschlagung mit Wärmeenergie erfolgen. Alternativ kann die Energie-Beaufschlagung beispielsweise mittels Strahlung und/oder Induktion und/oder Vibration und/oder Schall und/oder mittels eines elektrischen Stroms erfolgen.

Hierbei wird die Vormaterialschicht bevorzugt erwärmt, insbesondere auf eine Temperatur nahe oder gleich einer Verdampfungstemperatur des Behandlungsmittels der Behandlungsschicht. Bevorzugt wird dabei die Vormaterialschicht auf eine Temperatur innerhalb eines Temperaturbereichs von ± 20° C der Verdampfungstemperatur des Behandlungsmittels der Behandlungsschicht erwärmt. Ein solcher Erwärmungsschritt kann zeitlich kontinuierlich erfolgen oder in diskontinuierlichen Zeitintervallen durchgeführt werden. "Zeitlich kontinuierlich" bedeutet, dass die Energie-Beaufschlagungsschritte oder Erwärmungsschritte mit einem zeitlichen Überlapp durchgeführt werden.

Bevorzugt umfasst die Behandlungsschicht ein Lösemittel als Behandlungsmittel, wie beispielsweise Wasser, insbesondere deionisiertes oder voll entsalztes Wasser (VE-Wasser). Dabei wird bevorzugt die Vormaterialschicht auf eine Temperatur zwischen und einschließlich 80° C und 120° C, bevorzugt zwischen und einschließlich 90° C und 110° C, besonders bevorzugt auf 100° C, erwärmt. Auf diese Weise verdunstet oder verdampft die Behandlungsschicht im Wesentlichen rückstandsfrei, so dass lediglich die Materialschicht mit dem Muster der Behandlungsschicht auf der Transferplattformoberfläche verbleibt.

Bevorzugt umfasst das Verfahren einen zweiten Energie-Beaufschlagungsschritt, insbesondere nach dem ersten Energie-Beaufschlagungsschritt, bei welchem die Vormaterialschicht auf eine weiter erhöhte Temperatur gebracht wird, welche insbesondere geringer oder gleich oder größer der Schmelztemperatur oder dem Schmelzbereich des Materials der Materialschicht sein sollte.

Bei dem zweiten Energie-Beaufschlagungsschritt wird die Vormaterialschicht bevorzugt auf eine Temperatur gebracht, welche gleich oder größer der Schmelztemperatur oder dem Schmelzbereich des Materials der Materialschicht ist.

Beispielsweise weisen Legierungen oder auch bestimmte Polymere einen Schmelzbereich zwischen Solidus- und Liquidustemperatur auf.

Der zweite Energie-Beaufschlagungsschritt wird bevorzugt zeitlich kontinuierlich, d.h. zeitlich überlappend, mit dem ersten Energie-Beaufschlagungsschritt durchgeführt. Mit anderen Worten muss der erste Energie-Beaufschlagungsschritt nicht beendet werden bevor der zweite Energie-Beaufschlagungsschritt begonnen beziehungsweise durchgeführt wird. Alternativ dazu kann der zweite Energie-Beaufschlagungsschritt erst nach Beenden des ersten Energie-Beaufschlagungsschritts begonnen beziehungsweise durchgeführt werden, also diskontinuierlich mit dem ersten Energie-Beaufschlagungsschritt durchgeführt werden.

Der vorgenannte zweite Energie-Beaufschlagungsschritt kann bevorzugt auf verschiedene Weisen durchgeführt werden und hängt maßgeblich von der Materialwahl der Materialschicht und/oder der Materialauswahl der Transferplattform ab. Wird beispielsweise als Material der Materialschicht ein Hochleistungspolymer wie etwa PEEK (Polyetheretherketon), PEI (Polyethylenimin) und/oder PPSU (Polyphenylensulfon) verwendet, so kann die Vormaterialschicht im zweiten Energie-Beaufschlagungsschritt insbesondere auf einen Temperaturbereich zwischen und einschließlich 150° C bis 350° C erwärmt werden.

Bei der Verwendung von Metallen wie etwa Edelstahl als insbesondere granulat- und/oder pulverförmiges Material der Materialschicht wird die Vormaterialschicht während des zweiten Energie-Beaufschlagungsschritts bevorzugt auf eine Temperatur von etwa 1.500° C oder höher erwärmt.

Besonders bevorzugt ist es, wenn dabei lediglich die Vormaterialschicht und nicht etwa zusätzlich die Transferplattform erwärmt wird.

Der erste und/oder zweite Energie-Beaufschlagungsschritt können beispielsweise durch das Einbringen von Wärmeenergie mittels Mikrowellenstrahlung vermittelt werden. Die Mikrowellenstrahlung kann bevorzugt entweder über eine Vakuum-Laufzeitröhre, ein sogenanntes Magnetron, oder über einen Laser im Mikrowellenbereich, einem MASER (deutsch: Mikrowellenverstärkung durch simulierte Emission von Strahlung), erzeugt werden. Mit Hilfe des Magnetrons wird die Strahlung großflächig oder gerichtet an die Vormaterialschicht abgegeben. Bei der Verwendung eines MASERs kann die Mikrowellenstrahlung gerichtet in die Vormaterialschicht eingebracht werden.

Alternativ oder zusätzlich zur Verwendung von Mikrowellenstrahlung kann der Energieeintrag mittels Induktion erfolgen. Hierfür ist die Transferplattform insbesondere elektrisch leitfähig. Bei der Energie-Beaufschlagung bzw. Erwärmung mittels Induktion ist bevorzugt eine Induktionsspule, insbesondere eine Flachspule, nahe der Transferplattform angeordnet. Alternativ oder zusätzlich dazu kann die Induktionsspule derart angeordnet werden, dass die Transferplattform sich innerhalb derselben befindet. Des Weiteren kann die Fertigungsvorrichtung, insbesondere die Energie-Beaufschlagungsvorrichtung, zusätzliche geschaltete aktive und passive Spulen aufweisen, um eine gezielte Gestaltung des induktiven Wechselfeldes für den Energieeintrag mittels Induktion zu ermöglichen. Dadurch wird insbesondere ein optimierter Energieeintrag in die Vormaterialschicht gewährleistet.

Alternativ oder zusätzlich dazu kann die vorgenannte Energie, insbesondere Wärmeenergie, mittels elektrischer Hochfrequenz-Wechselfelder als dielektrische bzw. kapazitive Erwärmung eingebracht werden. Alternativ oder zusätzlich kann die vorgenannte Energie mittels galvanischer Kopplung durch ohmsche Erwärmung eingebracht werden. Besonders bevorzugt ist es, wenn der gesamte Erwärmungs- und insbesondere Aufschmelz-Vorgang der Materialschicht unter einer Schutzgas-Atmosphäre stattfindet, um Oxidation oder Wechselwirkungen mit atmosphärischen Gasen zu vermeiden.

Alternativ oder zusätzlich dazu kann die vorgenannte Energie zum Erwärmen und/oder Verschweißen der Schicht(en) in sich und/oder mit den bereits auf der Bauplattform vorhandenen Objektteilen des Objektes durch eine Redoxreaktion herbeigeführt oder begünstigt werden.

Die vorgenannten Energie-Beaufschlagungsschritte können jeweils oder beide nach dem Aufbringen der Behandlungsschicht und der Materialschicht und vor dem Übergeben der Materialschicht der Vormaterialschicht an die Bauplattform durchgeführt werden. Alternativ oder zusätzlich dazu können die Energie-Beaufschlagungsschritte jeweils oder beide nach dem Übergeben der Materialschicht und der Behandlungsschicht (Vormaterialschicht) an die Bauplattform durchgeführt werden. Mit anderen Worten können beispielsweise zunächst die Behandlungsschicht und die Materialschicht auf die Transferplattform aufgebracht werden, überschüssiges Material der Materialschicht entfernt werden, die verbleibende Vormaterialschicht an die Bauplattform übergeben werden und daraufhin mittels Energie-Beaufschlagung die Behandlungsschicht zumindest teilweise aus der an die Bauplattform übergebenen Vormaterialschicht entfernt werden. Des Weiteren kann daraufhin die übergebene (Vor-)Materialschicht auf eine Schmelztemperatur wie vorstehend erläutert erwärmt werden.

Dabei muss die Behandlungsschicht nicht vollständig aus der Vormaterialschicht entfernt werden. Vielmehr kann eine Menge an Behandlungsmittel der Behandlungsschicht nach dem ersten Energie-Beaufschlagungsschritt in der Vormaterialschicht verbleiben, insbesondere um dadurch den Schmelzpunkt des Materials der Materialschicht niedrig zu halten. Dies wird bevorzugt bei der Verwendung von Polymeren als Material der Materialschicht angewandt. Hierdurch lässt sich insbesondere eine bessere Haftung der Materialschicht an den Objektteilen des Objekts und/oder der Bauplattformoberfläche gewährleisten.

Vorzugsweise umfasst das Verfahren einen Faser-Beaufschlagungsschritt, insbesondere nach dem Reinigungsschritt, bei welchem die Vormaterialschicht zumindest teilweise mit Fasern, vorzugsweise mit Kurzfasern, beaufschlagt wird. Der Faser-Beaufschlagungsschritt wird insbesondere mittels der zumindest einen Faser-Beaufschlagungsvorrichtung durchgeführt.

Bevorzugt wird der Faser-Beaufschlagungsschritt während oder nach dem ersten und/oder zweiten Energie-Beaufschlagungsschritt durchgeführt. Dabei wird der Faser-Beaufschlagungsschritt insbesondere während und/oder nach einer Erwärmung der Vormaterialschicht in einen Temperaturbereich der Schmelztemperatur des Materials der Materialschicht durchgeführt, so dass die Vormaterialschicht eine verringerte Viskosität aufweist. Dadurch werden die Fasern wie vorstehend beschrieben mittels beispielsweise eines Recoaters mit sich drehenden Walzen und/oder mittels eines Materialstroms in Richtung der Vormaterialschicht auf der Transferplattformoberfläche und/oder der bereits vorhandenen Objektteile des Objektes auf der Bauplattformoberfläche beschleunigt. Dabei ist eine Orientierung der Fasern größtenteils willkürlich. Das bedeutet, dass eine bestimmte Menge an Fasern eher in einem steilen Winkel (insbesondere zwischen 45° und 90°) auf die Vormaterialschicht und/oder auf die bereits vorhandenen Objektteile des Objektes trifft und in Abhängigkeit von der Faser-Geschwindigkeit unter einem steilen Winkel eindringt. Fasern, die unter einem zunehmend flacheren Winkel auftreffen, werden nicht oder kaum in die Vormaterialschicht oder in die besagten Objektteile des Objektes eindringen, sondern im Wesentlichen lediglich durch leichtes Anhaften auf der Oberfläche der Vormaterialschicht und/oder der besagten Objektteile des Objektes verbleiben. Die sich drehenden Walzen des Recoaters, der Materialstrom und/oder die Fasern können mit für den Fachmann bekannten Verfahren und Vorrichtungen erwärmt werden.

Durch ein solches Faser-Verstärkungsverfahren kann insbesondere eine nahezu isotrope Ausrichtung von in Polymer gebundenen Fasern erzielt werden.

Bevorzugt kann nach dem Faser-Beaufschlagungsschritt der vorgenannte Reinigungsschritt erneut durchgeführt werden, so dass nicht oder lediglich unzureichend gebundene Fasern von der Oberfläche der Vormaterialschicht und/oder der Objektteile des Objektes entfernt werden.

Besonders bevorzugt ist es, wenn sowohl die zuletzt übergebene Schicht (Objektteil des Objektes) auf der Bauplattform und die Vormaterialschicht auf der Transferplattformoberfläche mit Fasern beaufschlagt werden. Dadurch erfolgt eine Faser-Verstärkung zwischen den Grenzen der einzelnen Schichten des hierbei hergestellten Objektes. Hierbei kann das Beaufschlagungsverhältnis der Fasern zwischen dem Objektteil des Objekts und der zu übergebenden Schicht in etwa 1:1 sein. Das heißt, dass in etwa die Hälfte der Fasern, welche in einer Schicht des Objekts vorhanden sind, in die Oberfläche des Objektteils des Objekts auf der Bauplattform und in etwa die andere Hälfte dieser Fasern in die zu übergebende Schicht eingefügt werden.

Bevorzugt umfasst das Verfahren einen dritten Energie-Beaufschlagungsschritt vor und/oder während des Faser-Beaufschlagungsschritts, bei welchem der Vormaterialschicht auf der Transferplattform und/oder den Objektteilen des Objektes auf der Bauplattform vor und/oder während des Beaufschlagens mit Fasern Energie zugeführt wird. Hierdurch werden die Vormaterialschicht auf der Transferplattform und/oder die Objektteile des Objektes auf der Bauplattform bevorzugt erwärmt. Durch die Energie-Beaufschlagung bzw. die Erwärmung der Vormaterialschicht auf der Transferplattform und/oder der Objektteile des Objektes auf der Bauplattform wird bevorzugt die Viskosität der Vormaterialschicht bzw. der besagten Objektteile des Objektes verringert, sodass die Fasern tiefer in dieselben eindringen können.

Alternativ oder zusätzlich zur Energie-Beaufschlagung kann die Viskosität der Vormaterialschicht und/oder der Objektteile des Objektes mittels Lösungsmittel und/oder Druckveränderungen und/oder mittels weiterer physikalischer und/oder chemischer Maßnahmen oder mittels einer Kombination derselben verringert werden. Durch die Erwärmung der Vormaterialschicht und der Objektteile des Objektes, welche insbesondere beide mit Fasern beaufschlagt sind, können die Fasern von einem der beiden in das andere der beiden eingeführt werden während die Vormaterialschicht und die Objektteile des Objektes einander kontaktieren.

Wird beispielsweise PEEK als Material der Materialschicht verwendet und in den Temperaturbereich der Schmelztemperatur oder auf die Schmelztemperatur erwärmt, nimmt die Viskosität dieses Polymermaterials in der Materialschicht ab.

Bei der Verarbeitung von PEI als Material der Materialschicht hingegen kann ein vergleichbarer Effekt mittels des Lösungsmittels DCM (Dichlormethan) erzielt werden. Ein solches Lösungsmittel ist bevorzugt Bestandteil der Behandlungsschicht und/oder wird vor dem Faser-Beaufschlagungsschritt zusätzlich auf die Vormaterialschicht und/oder auf die Objektteile des Objektes aufgebracht. Bevorzugt ist ein Anteil des Lösungsmittels DCM in der Behandlungsschicht mindestens 10% der Behandlungsschicht. Bei der Verwendung eines Lösungsmittels zum Verringern der Viskosität der Vormaterialschicht und/oder der Objektteile des Objektes kann das Verfahren einen zusätzlichen (quasi vierten) Erwärmungsschritt nach dem Faser-Beaufschlagungsschritt aufweisen, um das Lösungsmittel zu verdampfen.

Bei der Verwendung eines Lösungsmittels zum Verringern der Viskosität können die Fasern mit diesem Lösungsmittel vermischt sein bzw. in diesem gelöst sein, wobei dann die entsprechende Oberfläche der Schicht und/oder der Objektteile des Objektes mit der Mischung aus Lösungsmittel und Fasern beaufschlagt wird.

In einer besonderen Ausführungsform können die Fasern bevorzugt unmittelbar vor dem Faser-Beaufschlagungsschritt erwärmt werden, beispielsweise mittels Strahlungsenergie wie etwa Mikrowellenstrahlung oder Infrarotstrahlung. Eine entsprechende Strahlungsquelle kann außerdem auch für die Ausrichtung der Fasern genutzt werden. Der Einsatz eines beschleunigenden Materialstroms kann damit überflüssig werden. Außerdem kann die Strahlung auch nach der Beaufschlagung und dem Eindringen in die jeweilige Oberfläche für eine Nachjustierung der Ausrichtung der Fasern genutzt werden. Wenn auf diesem Weg ebenfalls Wärmeenergie in die Fasern und damit in das Polymermaterial eingebracht wird, kann die Temperatur bzw. die Lösungsmittelkonzentration für die Weiterverarbeitung eingestellt werden.

Besonders vorteilhafterweise entspricht die Temperatur der Vormaterialschicht vor und/oder während des Pressens zumindest der Plastifizierungstemperatur und/oder der Schmelztemperatur des Materials der Materialschicht. Auf diese Weise wird ein optimaler Halt / ein optimales Verbinden zwischen aufeinanderfolgenden Schichten erreicht. Vorteilhafterweise entspricht hierbei die Temperatur der Vormaterialschicht zumindest der Plastifizierungstemperatur bzw. der Schmelztemperatur des Materials der Materialschicht bevorzugt kurz vor dem In-Kontakt-Bringen oder Pressen, insbesondere am Anfang des Pressens, wobei die Temperatur der Vormaterialschicht, insbesondere durch den Kontakt mit der Bauplattform und/oder den Objektteilen des Objektes, während des Pressens abnimmt.

Vorteilhafterweise erfolgt während und/oder nach dem Schritt des Ablösens der Vormaterialschicht von der Transferplattform ein Kühlen der Transferplattformoberfläche und/oder der Bauplattformoberfläche. Somit kann ein Ablösen des Materials von der Transferplattform vereinfacht werden.

In den Schritten des Aufbringens wird in einer bevorzugten Ausgestaltung genau eine Vormaterialschicht auf der Transferplattformoberfläche gefertigt. Somit wird jede Vormaterialschicht einzeln gefertigt und an die Bauplattform übergeben. Damit sind alle Schichten optimal miteinander verbunden, da das Verbinden einzelner Schichten zu dem fertigen Objekt ausschließlich durch die Übergabe derselben von der Transferplattform an die Bauplattform erfolgt. Ein unmittelbares Fertigen einer Schicht auf einer bereits vorhandenen Schicht (auf der Transferplattform) ist somit vermieden.

Zum Übergeben der Vormaterialschicht von der Transferplattform an die Bauplattform, insbesondere zum relativen Annähern der Transferplattform und der Bauplattform, wird bevorzugt die Bauplattform entlang der ersten Richtung und der zweiten Richtung und/oder der dritten Richtung bewegt. Die Transferplattform verbleibt vorteilhafterweise an einer vordefinierten Position. Insbesondere eine Bewegung der Transferplattform entlang der dritten Richtung ist bevorzugt nicht vorgesehen. Die Transferplattform kann entweder stationär oder entlang der ersten Richtung oder entlang der ersten und der zweiten Richtung bewegt werden, wobei eine Bewegung insbesondere nur zum Aufbringen der Vormaterialschicht durchgeführt wird. Die Schicht kann besonders vorteilhaft derart aufgebracht werden, dass die Transferplattform entlang der ersten Richtung und die Ausbringeinheit(en) entlang der zweiten Richtung oder umgekehrt bewegt werden. In jedem Fall ist bevorzugt vorgesehen, dass die Transferplattform während der Übergabe der Schicht an die Bauplattform an einer vordefinierten Position verbleibt.

Vorteilhafterweise können in einem Fall, in welchem eine Mehrzahl von Transferplattformen vorgesehen ist, alle Transferplattformen zum Übergeben der jeweiligen Schichten an der gleichen vordefinierten Position, insbesondere bezüglich der zweiten Richtung, verbleiben.

Bevorzugt weist die Behandlungsschicht gemäß den vorstehenden Erläuterungen ein Lösungsmittel auf. Besonders bevorzugt weist die Behandlungsschicht ein Lösungsmittelgemisch auf, wobei beispielsweise ein Lösungsmittel mit weiteren Zusatzstoffen wie etwa gelösten Polymeren und/oder Nanopartikeln und/oder Fasern vorgesehen ist.

Die Behandlungsschicht umfasst bevorzugt ein Medium, welches bei Raumtemperatur, insbesondere bei 20° C, in flüssiger Form vorliegt. Die Behandlungsschicht kann Wasser sein oder umfassen. Alternativ oder zusätzlich dazu umfasst die Behandlungsschicht einen Alkohol und/oder Glykole wie Ethylenglykol, Dieethylenglykol, Triethylenglykol, Propylenglykol oder Polyethylenglykol und/oder einen Ester und/oder einen Ether und/oder ein Acetal und/oder eine Säure und/oder eine Base und/oder einen Puffer oder ist aus zumindest einem dieser gebildet.

In einer bevorzugten Ausführungsform ist die Behandlungsschicht mindestens aus einem Lösungsmittel aus der Gruppe der halogenfreien und unpolaren Kohlenwasserstoffe und deren Derivate und/oder einem Lösungsmittel aus der Gruppe der bio-basierten Lösungsmittel ausgeführt oder umfasst mindestens eines davon.

In manchen Ausführungsformen ist die Behandlungsschicht aus mindestens einem Material ausgeführt oder umfasst mindestens ein Material, welches eine chemische Reaktion aktivieren oder begünstigen kann, welches eine Komponente einer chemischen Reaktion sein kann oder eine Kombination aus diesen umfasst, insbesondere für eine chemische Reaktion mit der Materialschicht.

In manchen Ausführungsformen ist oder umfasst die Behandlungsschicht ein/einen Klebstoff oder zumindest eine Komponente eines Klebstoffs. In bevorzugten Ausführungsformen ist der Klebstoff aus einem Epoxidharz, einem Polyesterharz, einem Phenolharz oder einem Acryl gebildet oder umfasst mindestens eines davon. Hierbei kann die Behandlungsschicht insbesondere zusammen mit der Materialschicht an die Bauplattform beziehungsweise an die bereits vorhandenen Objektteile des Objekts übertragen werden.

In manchen Ausführungsformen ist die Behandlungsschicht aus mindestens einem Lösemittel und mindestens einem gelösten Polymer gebildet. In bestimmten Ausführungsformen können in der Behandlungsschicht weitere Stoffe dispergiert sein, welche bevorzugt als Feststoffe ausgeführt sein können. In manchen Ausführungsformen können dispergierte oder gelöste Stoffe als Nanopartikel ausgeführt sein oder solche umfassen. In bestimmten Ausführungsformen können in die Behandlungsschicht eingebrachte Stoffe mindestens eines der folgenden umfassen oder daraus ausgeführt sein: Bornitrid-Nanoröhren (BNNTs), Kohlenstoffhaltige Nanopartikel, Metall- und Halbmetall-Oxide, Halbleiter, Metalle, Metallsulfide. Nanopartikel können bevorzugt vor dem Aufbringen der Behandlungsschicht mit mindestens einem elektrischen Feld in Verbindung gebracht werden. Auf diese Weise können Nanopartikel nach dem Aufbringen auf die Transferplattformoberfläche durch das Anlegen eines elektrischen Feldes, bevorzugt im näheren Bereich der Transferplattform, gerichtet werden.

In manchen Ausführungsformen kann die Behandlungsschicht Wasser oder eine wässrige Lösung umfassen. So kann beispielsweise ein Gemisch aus Wasser und Glykol als der Behandlungsschicht verwendet werden. Eine solche Behandlungsschicht kann nach dem Aufbringen auf die Transferplattform mit Mikrowellen beaufschlagt werden. Mikrowellen werden von Wasser gut absorbiert und können somit ein schnelles Aufheizen zumindest begünstigen. Auf diese Weise kann bevorzugt bei Polymeren ein beschleunigtes Schmelzen erwirkt werden.

In einer besonders bevorzugten Ausführungsform können das Objekt oder Objektteile des Objektes auf der Bauplattform vor dem Übertragen einer neuen Schicht mit der Behandlungsschicht beaufschlagt und/oder infiltriert werden. Eine solche Behandlungsschicht kann weitere Funktionen in dem Objekt erwirken. So können auf diese Weise in bestimmten Ausführungsformen in einer solchen Behandlungsschicht dispergierte Stoffe wie Fasern oder Haftvermittler auf das Objekt und dabei bevorzugt auf die zuletzt erzeugte Schicht aufgebracht und/oder eingebracht werden.

In manchen Ausführungsformen kann durch eine solche Beaufschlagung der letzten Schicht bei der Verwendung einer Behandlungsschicht auf wässriger Basis eine Erhöhung der Temperatur mittels Mikrowellen oder anderen Energieformen bevorzugt unmittelbar vor und/oder während der Übergabe der neu aufzubringenden Schicht erreicht werden.

In besonderen Ausführungsformen kann eine solche Behandlungsschicht Lösemittel verwenden oder umfassen, welche ein Verschmelzen der Schichten begünstigen, indem sie beispielsweise den Schmelzpunkt verwendeter Polymere im Kontaktbereich mit solchen Lösemitteln zumindest temporär reduzieren. Ein In-Kontakt-Bringen, eine Beaufschlagung und/oder eine Infiltration wie eben beschrieben kann beispielsweise durch Tauchen, Besprühen, Bedrucken oder Bedampfen durchgeführt werden, insbesondere mittels der Ausbringeinheit(en).

Alle oder einzelne der vorgenannten Erwärmungsschritte können global, also die gesamte Fertigungsvorrichtung erwärmend, oder lokal, also nur einzelne Komponenten der Fertigungsvorrichtung erwärmend, durchgeführt werden.

Neben der Schmelztemperatur oder dem Schmelzbereich eines Materials oder einer Materialschicht gibt es weitere prozessrelevante Temperaturen, welche für das Verfahren und die Vorrichtung von besonderer Bedeutung sein können. So kann es insbesondere vorteilhaft sein, während eines oder mehrerer der vorgenannten Energie-Beaufschlagungsschritte bzw. während eines oder mehrerer der vorgenannten Erwärmungsschritte mindestens ein Material oder eine Materialschicht auf eine Temperatur gleich oder größer der Wärmeformbeständigkeitstemperatur (HDT), der Vicat-Erweichungstemperatur, der Glasübergangstemperatur, der Kristallisationstemperatur oder der Rekristallisationstemperatur zu erwärmen.

Neben den vorgenannten Normtemperaturen gibt es weitere Temperaturen von Materialien und Materialschichten, welche zumindest für bestimmte Ausführungsformen des Verfahrens und der Vorrichtung von Bedeutung sein können. So wird insbesondere eine Lösungsmittel-Erweichungstemperatur definiert. Eine Lösungsmittel-Erweichungstemperatur beschreibt diejenige Temperatur, bei welcher ein mit mindestens einem bestimmten Lösungsmittel durchsetztes oder infiltriertes Material, insbesondere ein Polymermaterial, viskose oder schmelzviskose und/oder andere technische Eigenschaften aufweist, welche mit der Wärmeformbeständigkeitstemperatur (HDT) des gleichen Materials oder der gleichen Materialmischung zumindest stark vergleichbar sind, jedoch durch das enthaltene Lösungsmittel um eine Temperatur bis zu 150°C, bevorzugt bis zu 100°C und besonders bevorzugt bis zu 30°C niedriger ist. Die Eigenschaften einer temperaturabhängigen Änderung des Schmelzverhaltens eines Materials sind insbesondere abhängig von der Art des Lösungsmittels oder des Lösungsmittelgemisches und dessen Konzentration und/oder der Verteilung im Material bzw. in der Materialschicht. Mit anderen Worten können durch das Beaufschlagen und/oder Einbringen von Lösungsmitteln in Materialien dessen Eigenschaften wie Schmelztemperatur, Wärmeformbeständigkeit, Schmelzviskosität sowie weitere Eigenschaften verändert bzw. herabgesetzt werden. Dabei ist die Veränderung dieser Eigenschaften insbesondere abhängig von der Art des Lösungsmittels oder des Lösungsmittelgemisches, dessen Konzentration bezogen auf das Material bzw. die Materialmenge und dessen homogene oder inhomogene Verteilung im Material oder in der Materialschicht.

Bevorzugt kann anstelle der Behandlungsschicht und der Materialschicht eine Schicht durch einen Extrusionsprozess mittels eines Extruders als Ausbringeinheit aufgebracht werden.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Abbildung einer Fertigungsvorrichtung gemäß einem Ausführungsbeispiel der Erfindung,
- Fig. 2: eine Detailansicht einer Ausbringeinheit der Fertigungsvorrichtung gemäß einem Ausführungsbeispiel der Erfindung,
- Fig. 3: eine schematische Detailansicht der Fertigungsvorrichtung gemäß einem Ausführungsbeispiel der Erfindung,
- Fig. 4: ein schematisches Ablaufdiagramm eines Verfahrens gemäß einem Ausführungsbeispiel der Erfindung,
- Fig. 5: eine schematische Detailansicht eines Ablaufs von Verfahrensschritten des Verfahrens gemäß einem Ausführungsbeispiel der Erfindung,
- Fig. 6: eine schematische Detailansicht einer Ausgestaltung der Fertigungsvorrichtung gemäß einem Ausführungsbeispiel der Erfindung,
- Fig. 7: eine schematische Detailansicht eines Ablaufs eines Verfahrensschrittes des Verfahrens gemäß einem Ausführungsbeispiel der Erfindung,
- Fig. 8: eine schematische Detailansicht einer Ausgestaltung der Fertigungsvorrichtung gemäß einem Ausführungsbeispiel der Erfindung,
- Fig. 9: eine schematische Detailansicht einer Ausgestaltung der Fertigungsvorrichtung gemäß einem Ausführungsbeispiel der Erfindung,
- Fig. 10: eine schematische Detailansicht einer Ausgestaltung der Fertigungsvorrichtung gemäß einem Ausführungsbeispiel der Erfindung,
- Fig. 11,12: schematische Detailansichten einer Ausgestaltung der Fertigungsvorrichtung gemäß einem Ausführungsbeispiel der Erfindung,
- Fig. 13: eine schematische Detailansicht einer Ausgestaltung der Fertigungsvorrichtung gemäß einem Ausführungsbeispiel der Erfindung, und
- Fig. 14: eine schematische Detailansicht einer Ausgestaltung der Fertigungsvorrichtung gemäß einem Ausführungsbeispiel der Erfindung.

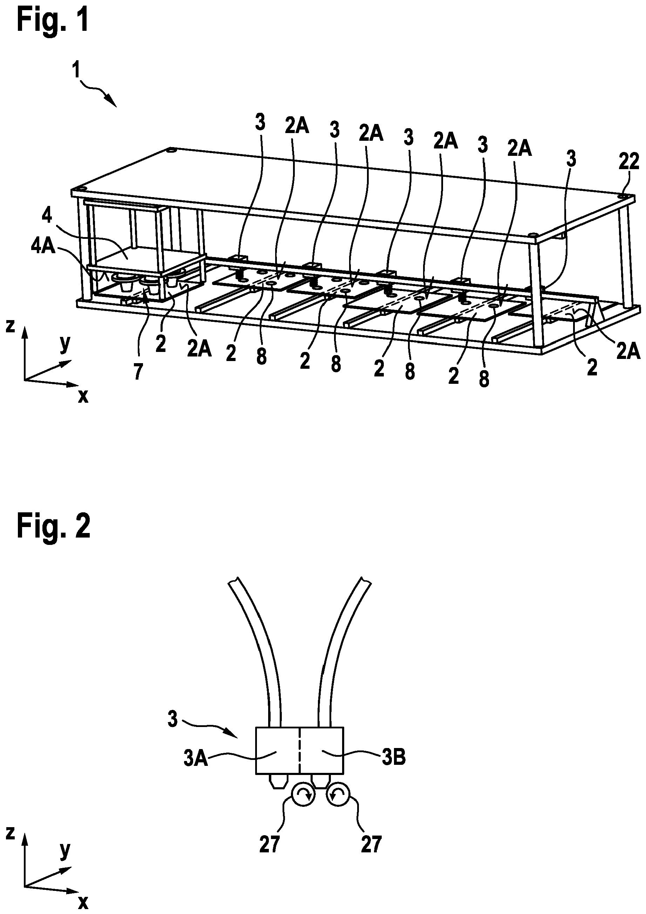

Figur 1 zeigt schematisch eine Fertigungsvorrichtung 1 zum schichtweisen Fertigen eines Objektes 7. In dem gezeigten Ausführungsbeispiel werden vier gleichartige Objekte 7 gleichzeitig gefertigt. Dazu sind eine Bauplattform 4 mit einer Bauplattformoberfläche 4A und sechs Transferplattformen 2 mit jeweils einer Transferplattformoberfläche 2A vorhanden. Jeder Transferplattform 2 ist eine Ausbringeinheit 3 zugeordnet. Somit lassen sich mehrere Schichten 8 der Objekte 7 im Wesentlichen gleichzeitig (parallel) fertigen (die Fertigung der Schichten 8 wird nachstehend erläutert). "Im Wesentlichen gleichzeitig (parallel) fertigen" meint, dass sich das Fertigen der mehreren Schichten 8 unter Verwendung der Transferplattformen 2 und der diesen zugeordneten Ausbringeinheiten 3 zeitlich zumindest teilweise überlappt, vorzugsweise zeitlich größtenteils bis vollständig überlappt. Damit ist eine Parallelisierung in der Fertigung erreicht. Sobald die einzelnen Schichten 8 fertiggestellt sind, werden diese Schichten 8 an die Bauplattform 4 übergeben. Auf der Bauplattformoberfläche 4A werden somit die Schichten 8 zu den Objekten 7 schichtweise zusammengesetzt.

In diesem Beispiel weist die Fertigungsvorrichtung 1 zwei Ausbringeinheiten 3A, 3B für jede Transferplattform 2 auf (siehe Figur 2). Bei diesen Ausbringeinheiten 3A, 3B handelt es sich jeweils insbesondere um eine Druckeinheit 3A und einen Recoater 3B, welche zusammen die Schichten 8 nach dem sogenannten Binder-Jetting Verfahren auftragen.

Diese Ausbringeinheiten 3A, 3B sind in Figur 2 detaillierter dargestellt. In der nachstehenden Erläuterung werden die Ausbringeinheiten 3A, 3B zusammenfassend als eine Ausbringeinheit 3 bezeichnet, welche die Druckeinheit 3A und den Recoater 3B umfasst.

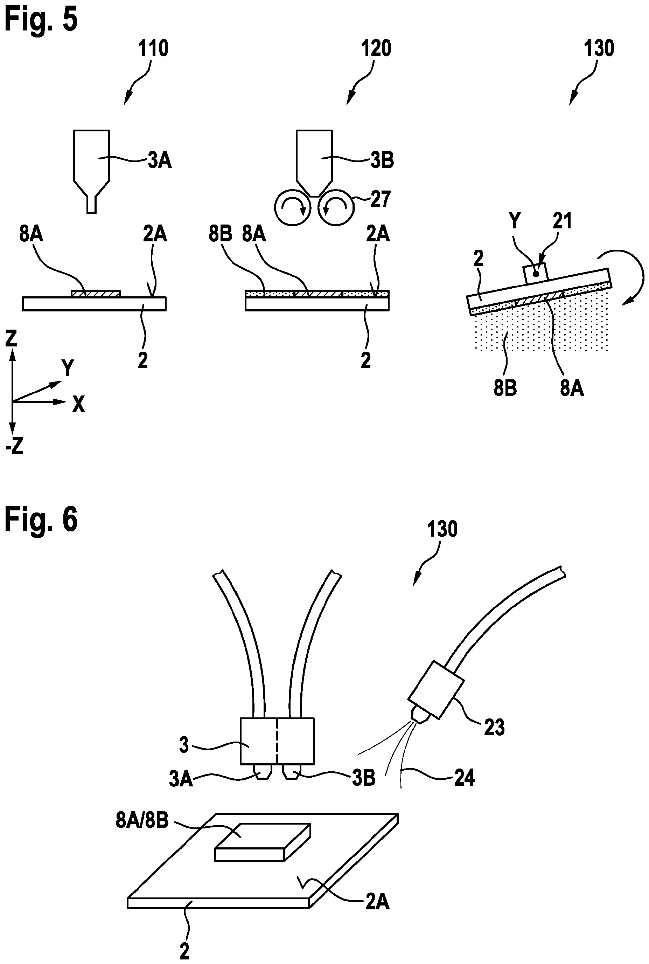

Die Ausbringeinheit 3 weist eine Druckeinheit 3A auf. Die Druckeinheit 3A ist beispielsweise ein Piezo-Druckkopf. Die Druckeinheit 3A ist insbesondere eingerichtet, eine Behandlungsschicht (nachstehend mit Bezug auf Figur 5 erläutert) auf die Transferplattform 2 aufzutragen. Die Behandlungsschicht besteht hierbei beispielsweise aus einem Lösungsmittel.

Des Weiteren weist die Ausbringeinheit 3 den Recoater 3B auf. Der Recoater 3B enthält rotierbare Walzen 27 und ist eingerichtet, ein Granulat und/oder pulverförmiges Material auf die Transferplattform 2 aufzutragen und eine Materialschicht auszubilden. Gemäß dem Binder-Jetting Verfahren (nachstehend detailliert erläutert) werden die Schichten 8 mittels einer Kombination und Verbindung der Behandlungsschicht mit der Materialschicht gebildet.

In den Figuren 1 und 2 sind die Druckeinheiten 3A und die Recoater 3B als paarweise einteilig dargestellt. Diese können jedoch auch paarweise räumlich voneinander getrennt angeordnet sein. Dabei können die Druckeinheit 3A und der Recoater 3B insbesondere unabhängig voneinander beweglich sein.

Jede Ausbringeinheit 3 kann eine oder mehrere Druckeinheiten 3A und/oder einen oder mehrere Recoater 3B aufweisen. Des Weiteren kann die Fertigungsvorrichtung 1 mehrere solcher Ausbringeinheiten 3 für jede Transferplattform 2 aufweisen.

Mit Bezug wieder auf Figur 1, weisen die Transferplattformen 2 gemäß dem hier gezeigten Ausführungsbeispiel eine Beweglichkeit entlang der y-Richtung auf. Eine Bewegung in eine andere Raumrichtung ist hierbei bevorzugt nicht vorgesehen. Gemäß dem hier gezeigten Ausführungsbeispiel weisen die Ausbringeinheiten 3, insbesondere die Druckeinheiten 3A und die Recoater 3B, eine Beweglichkeit entlang der x-Richtung auf. Somit lässt sich jeweils eine Kontur/Schicht 8 auf den Transferplattformoberflächen 2A in der xy-Ebene erzeugen (die Schichtdicke in z-Richtung sei hierbei vernachlässigt). Damit können beliebig ausgestaltete Schichten 8 auf den Transferplattformoberflächen 2A erzeugt werden. In einigen Anwendungsfällen kann eine Schicht 8 eine Ausnehmung aufweisen. Weisen mehrere Schichten 8 eine entsprechende Ausnehmung aus, so lässt sich durch das serielle Übertragen dieser Schichten 8 an die Bauplattform 4 eine Kavität innerhalb des zu fertigenden Objekts 7 ausbilden.

Ist das Aufbringen einer Schicht 8 beendet, so verbleibt die Transferplattform 2 in einer Referenzposition, also in einer vordefinierten Position zur Übertragung der Schicht 8 an die Bauplattform 4. Hierbei können insbesondere alle Transferplattformen 2 nach dem jeweiligen Aufbringen einer Schicht 8 in der gleichen Referenzposition in y-Richtung verbleiben. Gemäß dem hier gezeigten Ausführungsbeispiel weist die Bauplattform 4 bevorzugt eine Beweglichkeit in alle drei Raumrichtungen, d.h. in die x-Richtung, in die y-Richtung und in die z-Richtung, auf. Damit ist auch gemeint, dass die Bauplattform 4 entgegengerichtet zu den jeweiligen Raumrichtungen bewegbar ist, also in -x-Richtung, in -y-Richtung und in -z-Richtung. Somit kann die Bauplattform 4 oberhalb der Transferplattformen 2 platziert werden, um anschließend eine Presskraft in -z-Richtung auf die Transferplattformen 2 aufzubringen. Gleichzeitig werden die Transferplattformen 2 stärker aufgeheizt als die Bauplattform 4. Somit erfolgt eine Übernahme der Schichten 8 von den Transferplattformen 2. Die Schichten 8 werden entweder auf die Bauplattformoberfläche 4A selbst oder auf bereits auf der Bauplattformoberfläche 4A vorhandene Objektteile 9 der Objekte 7 aufgebracht. Die Objektteile 9 sind dabei zuvor gefertigte Schichten, die bereits an die Bauplattform 4 übergeben und in z-Richtung miteinander verbunden wurden.

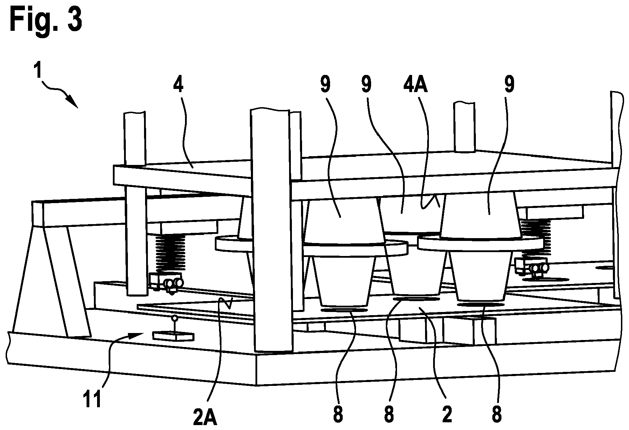

Dies ist in der Detailansicht in Figur 3 genauer dargestellt.

Aufgrund der Möglichkeit der Verpressung der einzeln hergestellten Schichten 8 wird eine optimale Festigkeit der Objekte 7 in Schichtdickenrichtung, d.h. in z-Richtung, erreicht. Insbesondere sind außerdem Kerbwirkungen vermieden oder reduziert. Somit ist neben einer schnelleren Fertigung aufgrund von Parallelisierung außerdem erreicht, dass die Fertigungsgüte erhöht ist.

Die Fertigungsvorrichtung 1 weist vorzugsweise eine Zerspanungseinheit 11 auf, in dem in Figur 3 gezeigten Ausführungsbeispiel in Form eines Fräswerkzeugs. Die Zerspanungseinheit 11 ermöglicht ein zerspanendes Bearbeiten der Objektteile 9, vor allem bevor die Objekte 7 fertiggestellt sind. Somit lassen sich insbesondere solche Bereiche bearbeiten, die nach Fertigstellung des jeweiligen Objekts 7 nur noch schwerlich oder gar nicht zugänglich sind. Zum zerspanenden Bearbeiten ist die Bauplattform 4 zu der Zerspanungseinheit 11 zu bewegen, wobei die Zerspanungseinheit 11 bevorzugt stationär angeordnet ist. Alternativ oder zusätzlich dazu kann die Zerspanungseinheit 11 bewegbar gelagert sein.

Um das Fertigen der Objekte 7 effizient auszugestalten, ist eine Haftfähigkeit der Schichten 8 an den Transferplattformoberflächen 2A geringer als an der Bauplattformoberfläche 4A bzw. an den bereits auf der Bauplattformoberfläche 4A vorhandenen Objektteilen 9. Dies wird insbesondere durch eine passende Materialauswahl der Transferplattformoberflächen 2 und der Bauplattformoberfläche 4A oder durch entsprechende Beschichtungen erreicht. Auch kann die jeweilige Oberflächenbeschaffenheit unterschiedlich sein. Besonders vorteilhaft weisen die Transferplattformen 2 Oberflächenstrukturen zur Vergrößerung der Transferplattformoberflächen 2A auf. Diese Oberflächenstrukturen können beispielsweise feine Stege oder Pyramiden sein, wobei sich die Oberflächenstrukturen an der diesen abgewandten Seite der Schichten 8 abzeichnen. Dadurch werden die Schichten 8 bei Übergabe an die Bauplattform 4 mit entsprechend vergrößerter Oberfläche auf die unmittelbar zuvor an die Bauplattform 4 übergebenen Schichten 8 aufgebracht, wodurch die Haftfähigkeit der Schichten 8 untereinander, d.h. der neu gefertigten Schichten 8 mit den bereits vorhandenen Objektteilen 9, erhöht ist.

Im Moment der Übergabe der gefertigten Schichten 8 kann außerdem ein passendes Temperaturmanagement erfolgen. Dieses Temperaturmanagement kann insbesondere zusätzlich zu den nachstehend erläuterten Erwärmungsschritten (Energie-Beaufschlagungsschritten) zur Herstellung der Schichten 8 durchgeführt werden. So kann durch entsprechende Aufheizung der Transferplattformen 2 und/oder der Bauplattform 4 ein für die Übergabe optimaler, materialabhängiger Temperaturgradient eingestellt werden. Ebenso kann durch zusätzliche Einleitung von Wärmeenergie, beispielweise mittels Ultraschall und/oder Wärmestrahlung (beispielsweise Infrarotstrahlung) und/oder Mikrowellenstrahlung, eine gezielte Temperaturführung erreicht werden. Ebenso kann eine Abkühlung, beispielsweise mittels Pressluft, gezielt erfolgen, um eine optimale Übergabe der Schichten 8 zu erreichen. Besonders vorteilhaft entspricht die Temperatur der Schichten 8 während der Übergabe zumindest der Plastifizierungstemperatur oder der Schmelztemperatur des Materials der Schichten 8.

Im Folgenden wird nun das Verfahren zum schichtweisen Fertigen von Objekten 7 einschließlich der Herstellung der Schichten 8 mittels des Binder-Jetting Verfahrens erläutert.

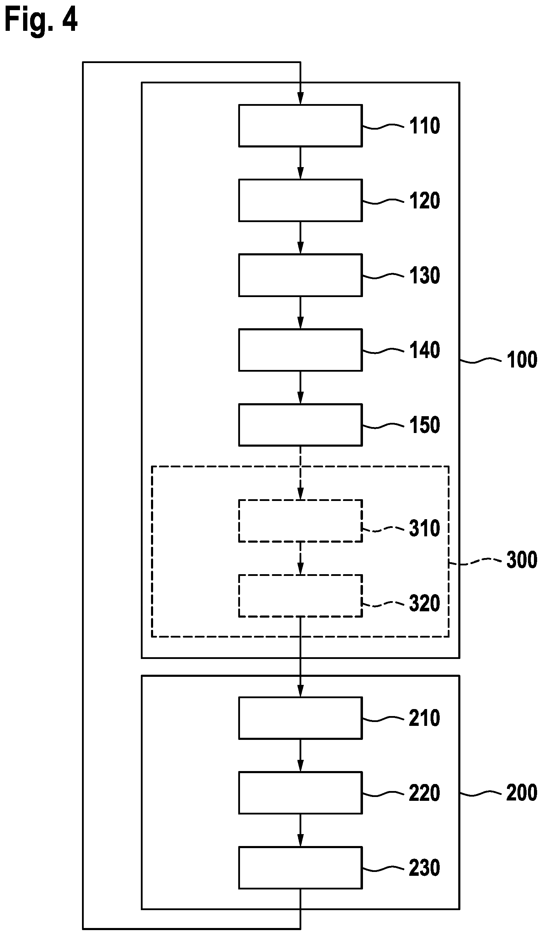

Figur 4 zeigt schematisch eine Übersicht eines Fertigungsverfahrens, das bevorzugt mit der zuvor beschriebenen Fertigungsvorrichtung 1 durchführbar ist. Das Verfahren unterteilt sich zunächst in zwei Schritte, wobei in einem ersten Schritt ein Herstellen 100 zumindest einer Schicht 8 auf der Transferplattform 2 erfolgt und in einem zweiten Schritt ein Übergeben 200 der Schicht(en) 8 an die Bauplattform 4 erfolgt.

Der Schritt des Herstellens 100 einer Schicht 8 lässt sich bevorzugt parallelisiert durchführen, d.h. dieser Schritt wird mehrfach und im Wesentlichen zeitgleich auf verschiedenen Transferplattformen 2 durchgeführt.

Figur 5 zeigt Detailansichten der Schritte 110 - 130 des Herstellens 100 der Schicht 8.

Zunächst erfolgt ein Aufbringen 110 zumindest einer Behandlungsschicht 8A mittels der Ausbringeinheit 3, insbesondere mittels der Druckeinheit 3A der Ausbringeinheit 3, auf die Transferplattform 2. Hierbei wird die Behandlungsschicht 8A, welche beispielsweise ein Lösungsmittel umfasst, gemäß einem vorgebbaren Muster auf die Transferplattform 2, insbesondere auf die Transferplattformoberfläche 2A, aufgetragen. Das Muster, gemäß welchem die Behandlungsschicht 8A auf die Transferplattformoberfläche 2A aufgetragen wird, entspricht im Wesentlichen der Form der herzustellenden Schicht 8, welche zum Herstellen des Objektes 7 an die Bauplattform 4 übergeben wird (Schritt 200).

Daraufhin erfolgt ein Aufbringen 120 zumindest einer Materialschicht 8B auf die Transferplattformoberfläche 2A bzw. auf die Transferplattformoberfläche 2A und auf die Behandlungsschicht 8A. Die Materialschicht 8B ist hierbei aus einem Granulat oder pulverförmigen Material gebildet. Hierbei wird die Materialschicht 8B insbesondere auf die gesamte Transferplattformoberfläche 2A aufgetragen. Dabei kommt die Materialschicht 8B zumindest abschnittsweise mit der Behandlungsschicht 8A in Kontakt, wodurch die Materialschicht 8B an den Stellen, an welchen die Behandlungsschicht 8A auf der Transferplattformoberfläche 2A vorhanden ist, an die Transferplattformoberfläche 2A gebunden wird.

Die aus der Verbindung der Behandlungsschicht 8A mit der Materialschicht 8B resultierende Schicht wird auch als "Vormaterialschicht" bezeichnet.

Die Reihenfolge des Aufbringens 110 der Behandlungsschicht 8A und des Aufbringens 120 der Materialschicht 8B kann vertauscht werden. Mit anderen Worten kann zuerst die Materialschicht 8B und dann die Behandlungsschicht 8A aufgetragen werden. Dabei wird bevorzugt weiterhin die Behandlungsschicht 8A gemäß dem vorgebbaren Muster der herzustellenden Schicht 8 auf die Transferplattform 2 aufgetragen.

Nach den Aufbringungsschritten 110, 120 erfolgt ein Reinigungsschritt 130, bei welchem das überschüssige Material der Materialschicht 8B von der Transferplattform 2 entfernt wird. Hierfür weist die Fertigungsvorrichtung 1 beispielsweise eine Drehvorrichtung 21 auf, welche die Transferplattform 2 zum Entfernen des überschüssigen Materials der Materialschicht 8B dreht. Wie in Figur 5 dargestellt wird hierbei die Transferplattform 2 um eine Achse Y gedreht, welche parallel zur y-Richtung verläuft (auch als "zweite Richtung" bezeichnet).

Alternativ kann die Transferplattform 2 auch entlang einer Achse parallel zur x-Richtung oder zur z-Richtung gedreht werden, um das überschüssige Material der Materialschicht 8B von der Transferplattform 2 zu entfernen. Bei der möglichen Drehung um die Achse parallel zur z-Richtung bewirkt eine aus dieser Drehung resultierende Zentrifugalkraft, dass das überschüssige Material der Materialschicht von der Transferplattform 2 entfernt wird. Dabei wird jedoch eine Drehgeschwindigkeit der Transferplattform 2 derart gewählt, dass das vorgegebene Muster der Vormaterialschicht beibehalten wird. Es ist hierbei insbesondere möglich, dass die Drehvorrichtung 21 die Transferplattform 2 um eine Achse dreht, welche in einer Ebene liegt, die durch die x-Richtung und/oder die y-Richtung und/oder die z-Richtung aufgespannt wird.

Die Transferplattform 2 wird bevorzugt um 180° um die Achse Y gedreht, sodass die Transferplattform 2, wie in Figur 5 dargestellt, nach dem Drehen kopfüber ausgerichtet ist, sodass die Transferplattformoberfläche 2A in die -z-Richtung zeigt.

Die Transferplattform 2 wird, nachdem das überschüssige Material der Materialschicht 8B durch die Schwerkraft von der Transferplattformoberfläche 2A heruntergefallen ist, entweder wieder um -180° gedreht, oder um weitere 180° (insgesamt also um 360°) gedreht, um wieder in der Ausgangslage (vor dem Drehen) zu sein.

In einer alternativen Ausgestaltung der Fertigungsvorrichtung 1 kann die Ausbringeinheit 3 entlang der z-Richtung unterhalb der Transferplattform 2 angeordnet sein. Dabei zeigt die Transferplattformoberfläche 2A in die -z-Richtung. Bei dieser Ausgestaltung kann der Reinigungsschritt 130 zumindest teilweise, insbesondere vollständig, entfallen, da das überschüssige Material der Materialschicht 8B, welches nicht mit der Behandlungsschicht 8A verbunden ist, durch die Schwerkraft nach unten fällt und nicht auf der Transferplattformoberfläche 2A verbleibt.

Dabei kann die Drehvorrichtung 21 dann die Transferplattform 2 um 180° drehen, sodass eine Übertragung 200 der hergestellten Schicht(en) 8 an die Bauplattform 4 erfolgen kann.

In einer weiteren, beispielhaften Ausgestaltung des Fertigungsverfahrens bzw. der Fertigungsvorrichtung 1 kann der Reinigungsschritt 130, wie in Figur 6 dargestellt, mittels einer Reinigungsvorrichtung 23 durchgeführt werden.

Hierbei ist die Reinigungsvorrichtung 23 zum Ansaugen und/oder Abblasen eines Fluides 24, insbesondere Luft und/oder Inertgas, eingerichtet. Die Reinigungsvorrichtung 23 ist beispielsweise an einem in Figur 1 dargestellten Rahmen 22 der Fertigungsvorrichtung 1 montiert, insbesondere beweglich montiert. Eine Austritts- oder Eintrittsdüse der Reinigungsvorrichtung 23 und/oder die gesamte Reinigungsvorrichtung 23 ist bevorzugt beweglich montiert. In einem weiteren Ausführungsbeispiel ist die Reinigungsvorrichtung 23 insbesondere an der Ausbringeinheit 3 montiert, um mit dieser gemeinsam bewegbar zu sein.

Der Reinigungsschritt 130 mittels der Drehvorrichtung 21 kann mit dem Reinigungsschritt 130 mittels der Reinigungsvorrichtung 23 kombiniert, insbesondere gleichzeitig oder nacheinander, durchgeführt werden.

Mit Bezug wieder auf Figur 4 wird nach den Aufbringungsschritten 110, 120 ein erster Energie-Beaufschlagungsschritt 140 durchgeführt. Dieser kann grundsätzlich vor oder nach dem Reinigungsschritt 130 durchgeführt werden. Bei diesem Ausführungsbeispiel wird die Vormaterialschicht durch den Energie-Beaufschlagungsschritt 140 erwärmt. Dieser Energie-Beaufschlagungsschritt wird nachfolgend als "erster Erwärmungsschritt 140" bezeichnet.

In dem ersten Erwärmungsschritt 140 wird die Vormaterialschicht, bestehend aus der Behandlungsschicht 8A und der Materialschicht 8B, auf eine Temperatur nahe der Verdampfungstemperatur des Behandlungsmittels der Behandlungsschicht 8A erwärmt. Hierbei bedeutet "nahe der Verdampfungstemperatur" einen Temperaturbereich von etwa 20 % um die Verdampfungstemperatur (also oberhalb oder unterhalb der Verdampfungstemperatur) des Behandlungsmittels der Behandlungsschicht 8A.

In einem Beispiel umfasst die Behandlungsschicht 8A ein deionisiertes oder voll entsalztes Wasser (VE-Wasser) als Behandlungsmittel. Hierbei wird also die Vormaterialschicht in dem ersten Erwärmungsschritt 140 auf etwa zwischen 90° C und 120° C, insbesondere auf 100° C, erwärmt.

Durch diesen ersten Erwärmungsschritt 140 wird die Behandlungsschicht 8A aus der Vormaterialschicht größtenteils entfernt, sodass im Wesentlichen nur noch die Materialschicht 8B auf der Transferplattform 2 verbleibt.

Der erste Erwärmungsschritt 140 kann auch schon während der Aufbringungsschritte 110, 120 begonnen werden. Dabei kann die Transferplattform 2 insbesondere vor dem Aufbringen 110 der Behandlungsschicht 8A vorgewärmt werden, wobei hierbei erst nach dem Aufbringen 120 der Materialschicht 8B und entweder vor oder nach dem Reinigungsschritt 130 die Verdampfungstemperatur des Behandlungsmittels der Behandlungsschicht 8A erreicht wird.

Wird die Fertigungsvorrichtung 1 in einem geschlossen Raum und/oder in einem geschlossen Behälter angeordnet, so kann mittels der Reinigungsvorrichtung 23 durch Ansaugen von Luft der Luftdruck in dem Raum/Behälter verringert werden, um ein Verdampfen der Behandlungsschicht 8A mittels der vorstehend beschriebenen Erwärmung zu unterstützen bzw. zu beschleunigen.

Das Fertigungsverfahren weist außerdem einen zweiten Energie-Beaufschlagungsschritt 150 auf. Der zweite Energie-Beaufschlagungsschritt 150 wird nach dem ersten Erwärmungsschritt 140 durchgeführt. Der zweite Energie-Beaufschlagungsschritt 150 wird nachfolgend als "zweiter Erwärmungsschritt 150" bezeichnet.

Während des zweiten Erwärmungsschritts 150 wird die verbleibende Materialschicht 8B auf eine Temperatur nahe oder oberhalb der Schmelztemperatur des Materials der Materialschicht 8B erwärmt. Hierbei bedeutet "nahe der Schmelztemperatur" einen Temperaturbereich von etwa 20 % um die Schmelztemperatur (also oberhalb oder unterhalb der Schmelztemperatur) des Materials der Materialschicht 8B.

Werden für die Materialschicht 8B beispielsweise Hochleistungspolymere wie etwa PEEK, PEI oder PPSU als Material verwendet, so kann hierbei die Materialschicht 8B auf eine Temperatur von etwa 250° C bis 350° C erwärmt werden.

Werden für die Materialschicht 8B, alternativ oder zusätzlich zu den vorstehend genannten Polymeren, Metalle wie etwa Edelstahl als Material verwendet, so kann hierbei die Materialschicht 8B auf eine Temperatur von etwa 1.500° C oder darüber erwärmt werden.

Wie anhand der gestrichelten Verbindungslinien in Figur 4 erkennbar ist, weist das Fertigungsverfahren selektive Schritte 310, 320 auf, welche vor der Übergabe 200 der Schicht 8 an die Bauplattform 4 gemäß einer alternativen Ausgestaltung der Fertigungsvorrichtung bzw. des Fertigungsverfahrens durchgeführt werden können. Werden diese Schritte 310, 320 nicht durchgeführt, erfolgt nach dem zweiten Erwärmungsschritt 150 die Übergabe 200 der Materialschicht 8B an die Bauplattform 4.

Die verbliebene und im zweiten Erwärmungsschritt 150 erwärmte, bevorzugt geschmolzene, Materialschicht 8B wird bevorzugt nach der zweiten Erwärmung 150 abgekühlt. Sofern die Schritte 310, 320 nicht durchgeführt werden, entspricht die Materialschicht 8B hiernach der Schicht 8, welche daraufhin an die Bauplattform 4 übergeben wird.

Im Folgenden wird zunächst die Übergabe 200 der Schicht 8 an die Bauplattform 4 erläutert, bevor die selektiven Schritte 310, 320 erläutert werden.

Der Schritt des Übergebens 200 weist mehrere Teilschritte auf:
Zunächst erfolgt ein relatives Annähern 210 von Transferplattform 2 und Bauplattform 4 (siehe hierzu insbesondere die Figuren 1 und 3). Dabei bleibt die Transferplattform 2 bevorzugt unbeweglich, während die Bauplattform 4 entlang der x-Richtung, y-Richtung und z-Richtung bewegt wird.

Anschließend erfolgt ein Anpressen 220 der Bauplattform 4 auf die Transferplattform 2 in -z-Richtung. Somit erfolgt ein enges Anliegen und optimales Haften der Schicht 8 an den Objektteilen 9, wie zuvor beschrieben.

Zuletzt erfolgt ein Ablösen 230 der Schicht 8 von der Transferplattform 2. Die Transferplattform 2 steht dann wieder für die Aufnahme einer weiteren Vormaterialschicht bereit, so dass die Schritte des Aufbringens 110, 120 erneut durchgeführt werden können. Sind mehrere Transferplattformen 2 vorhanden, so werden die Schichten 8 in einer vorgebbaren Reihenfolge von den einzelnen Transferplattformen 2 an die Bauplattform 4 übergeben.

Bei dem Schritt des Übergebens 200 können die Bauplattform 4 und die Transferplattform 2 relativ zueinander zentriert, insbesondere - in Draufsicht betrachtet - vollständig überlappend, angeordnet werden, wobei eine Positionierung der Schichten 8 an den Objektteilen 9 bei den Schritten des Aufbringens 110, 120, insbesondere bei dem Schritt des Aufbringens 110 der Behandlungsschicht 8A, vorbestimmt wird. Alternativ oder zusätzlich dazu können die Schichten 8 beim Aufbringen 110, 120 zentriert auf der Transferplattform 2 hergestellt werden, wobei die Positionierung der Schichten 8 an den Objektteilen 9 durch eine relative Ausrichtung der Bauplattform 4 und der Transferplattform 2 erfolgt.

Während des Schritts des Übergebens 200 können die Transferplattform(en) 2 und/oder die Bauplattform 4 zusätzlich zu den vorstehend erläuterten Erwärmungsschritten 140, 150 erwärmt werden, um die Schichten 8 möglichst rückstandsfrei an die Bauplattform 4 zu übergeben. Dabei ist es besonders vorteilhaft, wenn die Bauplattform 4 bzw. die bereits auf der Bauplattformoberfläche 4A vorhandenen Objektteile 9 des Objektes 7 auf eine Temperatur nahe der, insbesondere unterhalb der, Schmelztemperatur des Materials der Materialschicht 8B erwärmt wird/werden. Beispielsweise kann die bei dieser Erwärmung erreichte Temperatur etwa 5 %, bevorzugt 10 %, weiter bevorzugter 15 % unterhalb der Schmelztemperatur des Materials der Materialschicht 8B liegen.

Obwohl vorstehend die Übergabe 200 der Schicht 8, welche nach dem zweiten Erwärmungsschritt 150 aus der Vormaterialschicht resultiert, beschrieben wurde, kann abweichend davon die Übergabe 200 auch vor dem ersten Erwärmungsschritt 140 und/oder vor dem zweiten Erwärmungsschritt 150 durchgeführt werden. In einem solchen Fall wird nach der Übergabe 200 der erste Erwärmungsschritt 140 und/oder der zweite Erwärmungsschritt 150 an der soeben an die Bauplatte 4 und/oder die Objektteile 9 übertragenen Vormaterialschicht durchgeführt.

Die vorstehend erläuterten Schritte des Herstellens 100 und des Übergebens 200 der Schicht(en) 8 können beliebig oft wiederholt werden bis das Objekt 7 fertiggestellt ist.

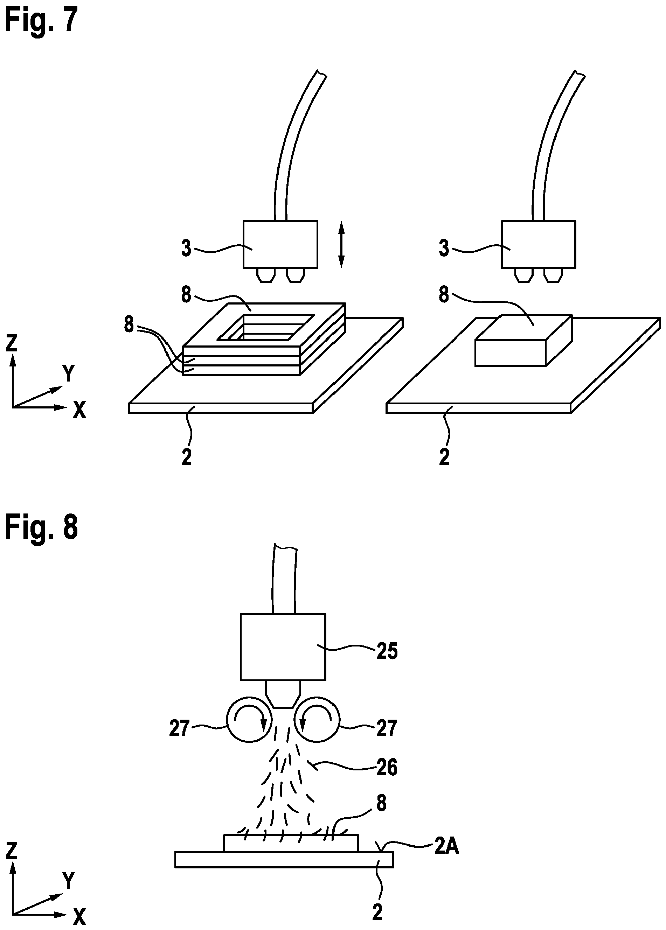

Figur 7 zeigt eine schematische Detailansicht einer Ausgestaltung der Fertigungsvorrichtung 1 gemäß einem Ausführungsbeispiel der Erfindung. Figur 7 zeigt insbesondere eine schematische Darstellung von zwei Transferplattformen 2 der Fertigungsvorrichtung 1.

Hierbei werden auf einer ersten Transferplattform 2 (links) beispielsweise drei erste Schichten 8, insbesondere Vormaterialschichten, aufeinander hergestellt, während auf der zweiten Transferplattform 2 (rechts) eine zweite Schicht 8 hergestellt wird, deren Schichtdicke/Höhe in z-Richtung im Wesentlichen der Gesamthöhe (in z-Richtung) der drei ersten Schichten entspricht. Die in Figur 7 links dargestellten gestapelten Schichten 8 können Vormaterialschichten sein, welche die Behandlungsschicht zumindest teilweise (noch) umfassen, oder lediglich die Materialschicht umfassen. Hierfür ist die Ausbringeinheit 3 entlang der z-Richtung bewegbar. Alternativ oder zusätzlich dazu kann auch die Transferplattform 2 entlang der z-Richtung bewegbar sein.

Auf diese Weise können eine oder mehrere Ebenen der Objektteile 9 nach dem Übergeben der Schichten 8 an die Bauplattform 4 auch jeweils aus einer Kombination von einzelnen oder mehreren Schichten 8 mehrerer Transferplattformen 2 gebildet werden.

Eine Höhe beziehungsweise eine Gesamthöhe dieser verschiedenen Schichten 8 muss nicht gleich sein. Stattdessen können diese auch gezielt in oder mit unterschiedlichen Höhen ausgebildet sein, wodurch sich insbesondere die Festigkeit des Objektess 7 in z-Richtung an gegebenenfalls vorbestimmten Stellen erhöhen lässt.

Wie vorstehend erläutert, können auch hierbei unterschiedliche Materialien der Schichten 8 kombiniert werden, um eine Multimaterialanordnung innerhalb einer Ebene, welche aus verschiedenen Schichten 8 mehrerer Transferplattformen 2 gebildet wird, des fertigen Objektes 7 zu erreichen. Konkret können hierbei vorteilhafterweise die drei ersten Schichten 8 (Figur 7, links) aus unterschiedlichen Materialien und die zweite Schicht 8 (Figur 7, rechts) aus einem einzigen Material gebildet werden.

Bei der Herstellung 100 von mehreren Schichten 8, wie in Figur 7 dargestellt, werden bevorzugt die Schritte 110 - 150 für jede Schicht 8 durchgeführt, bevor eine weitere Schicht 8 hergestellt wird. Während des zweiten Erwärmungsschritts 150 können die Schichten 8 miteinander verschmolzen werden.

Zur Verstellung beziehungsweise Bewegung der Ausbringeinheit 3 und/oder der Transferplattform 2 kann die Fertigungsvorrichtung 1 ein Festkörpergelenk und/oder einen Kurzhubzylinder und/oder einen Motor, insbesondere einen Modellbauservomotor, aufweisen. Diese können die Ausbringeinheit 3 und/oder die Transferplattform 2 besonders bevorzugt zwischen vorbestimmt angeordneten Endanschlägen bewegen und positionieren.

Mit Bezug auf die Figuren 4 und 8 werden nun die selektiven Schritte 310, 320 erläutert, welche zusammenfassend als Faserverstärkung 300 bezeichnet werden.

Dabei zeigt die Figur 8 eine schematische Detailansicht einer Ausgestaltung der Fertigungsvorrichtung 1 gemäß einem Ausführungsbeispiel der Erfindung.

Die Fertigungsvorrichtung 1 weist hierbei zumindest eine Faser-Beaufschlagungsvorrichtung 25 auf. Hierbei kann die Fertigungsvorrichtung 1 eine Faser-Beaufschlagungsvorrichtung 25 für jede Transferplattform 2 und insbesondere eine zusätzliche Faser-Beaufschlagungsvorrichtung 25 für die Bauplattform 4 aufweisen. In dem in Figur 1 dargestellten Beispiel würde die Fertigungsvorrichtung 1 somit sieben Faser-Beaufschlagungsvorrichtungen 25 aufweisen (sechs für die sechs Transferplattformen 2 sowie eine für die Bauplattform 4).

Die Faser-Beaufschlagungsvorrichtung 25 weist, ähnlich dem Recoater 3B, rotierbare Walzen 27 auf, mittels welchen die Faser-Beaufschlagungsvorrichtung 25 die Transferplattform 2, insbesondere die Schicht 8, in einem Faser-Beaufschlagungsschritt 310 mit Fasern 26 beaufschlagen kann.

Die Fasern 26 sind vorzugsweise Kohlenstofffasern. Die Fasern 26 weisen dabei vorzugsweise eine Länge von bis zu einigen Millimetern auf (sogenannte "Kurzfasern"). Alternativ können die Kurzfasern bevorzugt eine Länge von weniger als 1 mm aufweisen. Hierbei können auch Fasern verschiedener Längen miteinander kombiniert werden.

Mittels der rotierenden Walzen 27 werden die Fasern 26 in Richtung (-z-Richtung) der Transferplattform 2 beschleunigt. Dabei können sich die Fasern 26 aufgrund deren Luftwiderstand zum großen Teil so ausrichten, dass sie unter einem steilen Winkel (zwischen 45° und 90° relativ zur Schicht 8 oder zur x-Richtung) auf die Schicht 8 treffen. Die Fasern 26, welche unter einem steilen Winkel auf die Schicht 8 treffen, dringen in die Schicht 8 ein. Sie können vollständig in die Schicht 8 oder nur teilweise in die Schicht 8 eindringen.

Die Fasern 26, welche nicht unter einem steilen Winkel auf die Schicht 8 treffen, also unter einem flachen Winkel zwischen 0° und 45° relativ zur Schicht 8, dringen wenig bis gar nicht in die Schicht 8 ein. Sie verbleiben zum größten Teil an der Oberfläche der Schicht 8. Diese Fasern 26 können dann, beispielsweise mittels der Reinigungsvorrichtung 23 oder mittels Drehen durch die Drehvorrichtung 21 von der Schicht 8 entfernt werden. Alternativ oder zusätzlich dazu können diese Fasern 26 mittels Ultraschall von der Oberfläche der Schicht 8 gelöst werden.

Alternativ oder zusätzlich zu den rotierenden Walzen 27 können die Fasern 26 mittels eines Materialstroms, beispielsweise eines Gasstroms aus Luft und/oder Inertgas, beschleunigt werden (nicht gezeigt). Durch die Verwendung eines solchen Materialstroms kann die Ausrichtung der Fasern 26 vorteilhafterweise, insbesondere im Mittel, zu einem steilen Winkel von annähernd 90° beeinflusst werden.

Die Faser-Beaufschlagungsvorrichtung 25 kann außerdem die Objektteile 9 auf der Bauplattform 4 mit Fasern 26 beaufschlagen. Bei der Verbindung der Objektteile 9 mit der Schicht 8, welche ebenfalls mit Fasern 26 beaufschlagt wurde, können die Fasern 26 der Objekteile 9 in die Schicht 8 und umgekehrt eindringen. Hierfür können die Objektteile 9 und/oder die Schicht 8 vorteilhafterweise erwärmt werden und/oder mit Lösungsmittel beaufschlagt werden und/oder mittels Ultraschall angeregt werden, um eine Oberflächenspannung der Objektteile 9 und/oder der Schicht 8 zu verringern.

In einem weiteren, dritten Energie-Beaufschlagungsschritt 320 wird die Vormaterialschicht, bestehend aus der Behandlungsschicht 8A und der Materialschicht 8B oder nur die Materialschicht 8B (nach dem ersten Erwärmungsschritt 140) vor und/oder während des Beaufschlagens 310 erwärmt. Der dritte Energie-Beaufschlagungsschritt 320 wird nachfolgend als "dritter Erwärmungsschritt 320" bezeichnet.

Durch den dritten Erwärmungsschritt 320 wird eine Oberflächenspannung der Materialschicht 8B reduziert, sodass die Fasern 26 tiefer in diese eindringen können.

Nach dem dritten Erwärmungsschritt 320 wird die Materialschicht 8B abgekühlt (nicht gezeigt).

Alternativ oder zusätzlich zu dem dritten Erwärmungsschritt 320 kann die Oberflächenspannung der Materialschicht 8B mittels eines Lösungsmittels reduziert werden, welches beispielsweise mittels der Reinigungsvorrichtung 23 und/oder der Druckeinheit 3A aufgetragen wird.

Die vorstehend beschriebene Faserverstärkung 300 wird insbesondere nach dem Reinigungsschritt 130 durchgeführt. Vorzugsweise wird die Faserverstärkung nach der ersten Erwärmung 140 und während der zweiten Erwärmung 150 durchgeführt. Alternativ oder zusätzlich dazu kann die Faserverstärkung 300 nach der zweiten Erwärmung 150 durchgeführt werden, wobei insbesondere in dem dritten Erwärmungsschritt 320 die Temperatur der Materialschicht 8B nahe der Schmelztemperatur des Materials der Materialschicht 8B gehalten wird, sodass die Fasern 26 in diese eindringen können.

Werden die selektiven Schritte 310, 320 der Faserverstärkung 300 durchgeführt, so wird die daraus resultierende, faserverstärkte Materialschicht 8B als die zu übertragende Schicht 8 bezeichnet. Nach der Faserverstärkung 300 erfolgt dann die zuvor beschriebene Übertragung 200 der (faserverstärkten) Schicht 8 an die Bauplattform 4, insbesondere an die Objektteile 9.

Werden die selektiven Schritte 310, 320 der Faserverstärkung 300 durchgeführt, so kann es sich bei den Ausbringeinheiten 3 insbesondere um Extruder handeln, welche die Schicht(en) 8 nicht nach dem Binder-Jetting Verfahren herstellen. Die Extruder können dabei gleiches Material ausgeben oder es können unterschiedliche Materialen vorgesehen sein, so dass auf verschiedenen Transferplattformen 2 unterschiedliche Materialien aufbringbar sind. Besonders vorteilhaft arbeiten diese Extruder nach dem FFF-Verfahren.

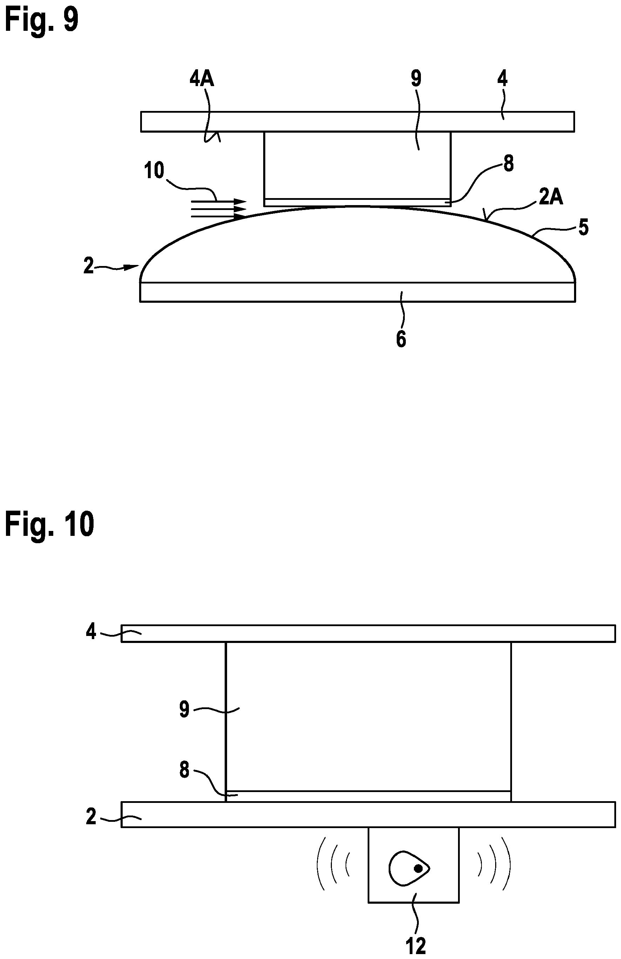

Figur 9 zeigt eine weitere Ausgestaltung der Fertigungsvorrichtung 1 gemäß einer Ausführungsform der vorliegenden Erfindung. Hierbei ist jede Transferplattform 2 durch eine Halteplatte 6 und ein Folienelement 5 gebildet.

Das Folienelement 5 wiederum bildet die Transferplattformoberfläche 2A. Somit wird die Schicht 8 mittels der Ausbringeinheit 3 auf das Folienelement 5 aufgebracht (und steht damit nicht in direktem Kontakt mit der Halteplatte 6). Das Folienelement 5 liegt dabei an der Halteplatte 6 an, so dass die Transferplattformoberfläche 2A wie eine Plattenoberfläche wirkt (in Figur 9 nicht gezeigt). Die Halteplatte 6 kann beheizbar sein. Um ein enges Anliegen des Folienelements 5 an der Halteplatte 6 zu ermöglichen, ist bevorzugt eine nicht gezeigte Spannvorrichtung für das Folienelement 5 vorgesehen. Zusätzlich oder alternativ ist auch vorstellbar, dass der von Folienelement 6 und Halteplatte 5 umschlossene Raum mit einem Unterdruck beaufschlagbar ist, um ein enges Anliegen des Folienelements 5 an der Halteplatte 6 zu ermöglichen. Das Folienelement 5 kann elastisch ausgebildet sein.

Nachdem die Schicht 8 wie vorstehend erläutert auf dem Folienelement 5 hergestellt wurde, erfolgt die Übergabe der Schicht 8 an die Bauplattform 4, in Figur 9 beispielsweise an ein bereits gefertigtes Objektteil 9. Zum Ablösen der Schicht 8 von dem Folienelement 5 wird das Folienelement 5 bereichsweise von der Halteplatte 6 abgehoben, so dass ein Abschälen der Schicht 8 von deren Rändern her erfolgt. Dieses Abheben des Folienelements 5 lässt sich beispielsweise über eine regelbare Zufuhr eines fluiden Arbeitsmediums in den von Folienelement 6 und Halteplatte 5 umschlossenen Raum bewerkstelligen. Der Vorgang des Ablösens kann durch Anströmen von Pressluft 10 an einen der besagten Ränder der Schicht 8 unterstützt werden, wobei die Pressluft 10 zusätzlich eine Kühlwirkung vermittelt.

Durch die Verwendung des Folienelements 5 kann somit eine einfache und zuverlässige Übergabe der Schicht 8 erfolgen, wobei eine Beschädigung der Schicht 8 oder des Objektteils 9 vermieden ist. Das Folienelement 5 ist bevorzugt aus Polyimid gebildet.

Figur 10 zeigt eine schematische Detailansicht einer weiteren Ausgestaltung der Fertigungsvorrichtung 1 gemäß einem Ausführungsbeispiel der Erfindung.

Hierbei weist die Fertigungsvorrichtung 1 zumindest eine Schwingungserzeugungsvorrichtung 12 auf. Die Schwingungserzeugungsvorrichtung 12 kann eine Ultraschallsonde, einen Schallwellen-Generator und/oder einen mechanischen Schwingungs-Generator wie etwa eine Exzenter-Unwucht umfassen. Die Fertigungsvorrichtung 1 weist insbesondere eine Schwingungserzeugungsvorrichtung 12 für jede Transferplattform 2 auf. Alternativ kann eine einzige Schwingungserzeugungsvorrichtung 12 derart in der Fertigungsvorrichtung 1 angeordnet sein, dass sie im Betriebszustand alle Transferplattformen 2 und/oder die Bauplattform 4 mit Schwingungen beaufschlagt.

Mittels der Schwingungserzeugungsvorrichtung 12 können Schwingungen in die Fertigungsvorrichtung 1 (hier insbesondere in die Transferplattform 2) eingebracht werden, um beispielsweise während der Übertragung der Schichten 8 von der Transferplattform 2 an die Bauplattform 4 die Schichtfestigkeiten durch eine gezielte Einbringung von Energie, insbesondere von Wärmeenergie und/oder kinetischer Energie, an den Kontaktflächen zu erhöhen. Hierbei kann kinetische Energie das Verbinden von Polymerketten in oder zwischen den Schichten 8 unterstützen.

Die Schwingungserzeugungsvorrichtung 12 kann außerdem verwendet werden, um während des Reinigungsschritts 130 das überschüssige Material der Materialschicht 8B zu entfernen oder eine Entfernung des überschüssigen Materials beispielsweise durch die Drehvorrichtung 21 und/oder durch die Reinigungsvorrichtung 23 zu unterstützen.

Die Fertigungsvorrichtung 1 kann zumindest eine weitere Schwingungserzeugungsvorrichtung 12 für die Bauplattform 4 aufweisen.

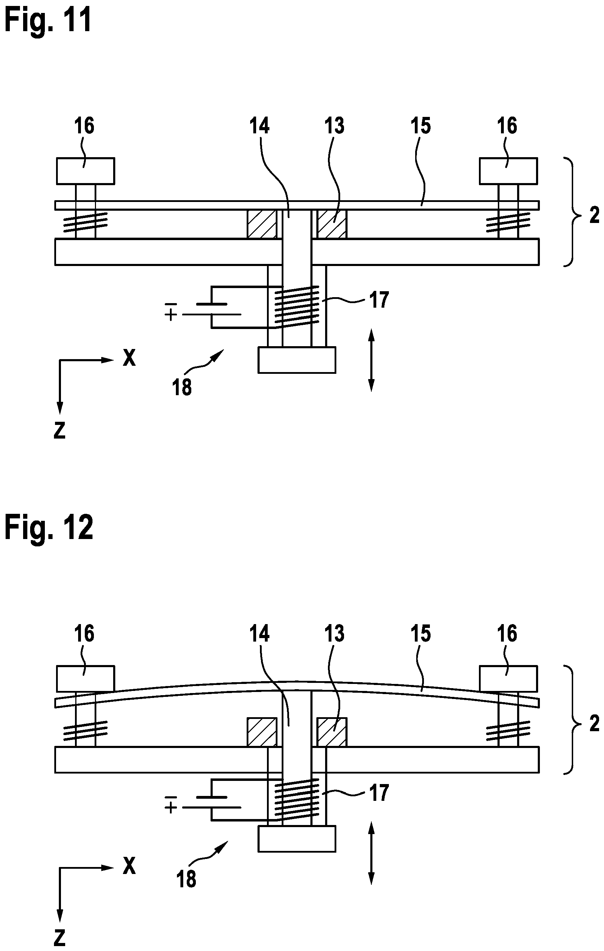

Figuren 11 und 12 zeigen schematische Detailansichten einer weiteren Ausgestaltung der Fertigungsvorrichtung 1 gemäß einem Ausführungsbeispiel der Erfindung. Figuren 11 und 12 zeigen insbesondere eine bevorzugte Ausgestaltung der Transferplattform 2 der Fertigungsvorrichtung 1. Dabei zeigt Figur 11 einen Grundzustand der Transferplattform 2 und Figur 12 einen gewölbten Zustand der Transferplattform 2, wie nachstehend erläutert wird.

Hierbei weist die Transferplattform 2 eine Transferplatte 15 auf, wobei die Schichten 8 auf der Transferplatte 15 wie vorstehend erläutert hergestellt werden. Die Transferplattform 2 weist außerdem ein aktives Stellglied 17 auf, welches die Transferplatte 15 gezielt wölben kann. Die Transferplattform 2 weist außerdem Abstandshalter 13 auf, welche eine Höhe der Transferplatte 15 beim Pressen optimieren.

Ein solcher Abstandshalter 13 kann insbesondere aus einem harten oder elastischen Material gebildet sein.

Darüber hinaus weist die Transferplattform 2 Stellschrauben 16 auf, welche als Gegenlagerung bei der Wölbung dienen. Je nach Anordnung der Stellschrauben 16 wird die Transferplatte 15 in x-Richtung und y-Richtung gleichmäßig oder annähernd gleichmäßig gewölbt. Werden die Stellschrauben 16 anders angeordnet und/oder wird die Transferplatte 15 an zwei sich gegenüberliegenden Seiten beispielsweise durch eine Strebe (nicht dargestellt) versteift, so lässt sich die Transferplatte 15 gezielt zumindest überwiegend in nur eine Richtung verbiegen. Mittels der Stellschrauben 16 kann außerdem die Parallelität der Transferplatte 15 zur Ebene der Ausbringeinheit 3 eingestellt werden. Die Stellschrauben 16 können insbesondere elektrisch angetrieben werden.

Das Stellglied 17 wird bevorzugt, wie in den Figuren 11 und 12 dargestellt, durch einen Elektromagneten 18 bewegt. Alternativ kann das Stellglied 17 auch ein Pneumatikzylinder sein. Das Stellglied 17 ist mit einem Stößel 14 verbunden, welcher Kräfte, die von dem Elektromagneten 18 erzeugt werden, auf die Transferplatte 15 überträgt.

Die Transferplatte 15 ist bevorzugt als CFK-Platte (kohlenstofffaserverstärkter Kunststoff) oder GFK-Platte (glasfaserverstärkter Kunststoff) ausgeführt.

Eine solche aktive Wölbung der Transferplatte 15 kann bei der Übertragung der Schicht 8 von der Transferplattform 2 an die Bauplattform 4 angewendet werden. Dies kann insbesondere in dem Moment erfolgen, in welchem der eigentliche Pressvorgang begonnen wird. Dadurch kann eine Kraftübertragung über eine gewisse Wegstrecke, welche durch einen Wölbungsradius definiert wird, erfolgen. Auf diese Weise lassen sich die Flächenkräfte beziehungsweise der wirksame Druck erhöhen, ohne dabei die Gesamtkraft wesentlich erhöhen zu müssen, da zuerst nur Bereiche in der Nähe eines Wölbungsmittelpunkts anliegen.

Weiter vorteilhaft ist es, dass eventuell vorhandene Luft beziehungsweise Schutzgase vor allem im Bereich des Wölbungsmittelpunkts, insbesondere bei relativ großflächigen Gebilden beziehungsweise Schichten 8, besser nach außen entweichen kann/können.

Vorzugsweise kann der Elektromagnet 18 pulsiert geschalten werden, wodurch dynamische Schwingungen durch pulsierende Wölbungen in der Transferplatte 15 erzeugt werden können.

Außerdem können die Schichten 8 durch die Wölbung leichter von der Transferplatte 15, insbesondere nach dem vorgenannten Abkühlen nach dem zweiten oder dem dritten Erwärmungsschritt 150, 320 abgelöst und an die Bauplattform 4 übertragen werden. Insbesondere können dadurch Zugkräfte verringert werden, welche beim Ablösen der Schichten 8 auf die Schichten 8 wirken.

Diese vorteilhafte Ausgestaltung kann insbesondere mit dem vorstehend erläuterten Folienelement 5 kombiniert werden.

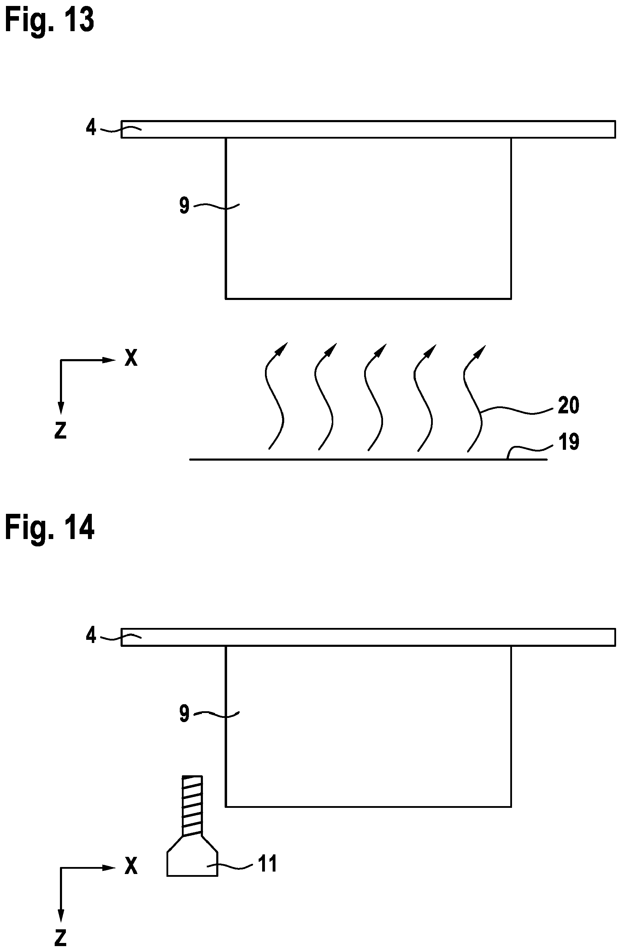

Figur 13 zeigt eine schematische Detailansicht einer weiteren Ausgestaltung der Fertigungsvorrichtung 1 gemäß einem Ausführungsbeispiel der Erfindung. Die Fertigungsvorrichtung 1 weist hierbei eine Erwärmungsvorrichtung 19, vorzugsweise einen Wärmestrahler 19, besonders bevorzugt eine Infrarotlichtquelle 19 auf, welche Objektteile 9 mit Wärme/Wärmestrahlung 20 beaufschlagt. Die Erwärmungsvorrichtung 19 kann somit wie in Figur 13 dargestellt, insbesondere die zuletzt an die Bauplattform 4 übertragenen Schichten 8 der Objektteile 9 temporär und schnell erwärmen, sodass mehr Wärmeenergie für die Bindung der aktuell zu übertragenden Schicht 8 an das Objektteil 9 bei der Übertragung 200 zur Verfügung steht.

Die Erwärmungsvorrichtung 19 kann insbesondere auch für die vorstehend erläuterten Erwärmungsschritte 140, 150 und/oder 320 verwendet werden.

Alternativ oder zusätzlich zum Wärmestrahler 19 können die Schichten 8 auch mittels eines elektrischen Feldes, welches von einem Generator (nicht dargestellt) als Erwärmungsvorrichtung 19 erzeugt wird, induktiv erwärmt werden.

Figur 14 zeigt eine schematische Detailansicht einer weiteren Ausgestaltung der Fertigungsvorrichtung 1 gemäß einem Ausführungsbeispiel der Erfindung. Hierbei ist insbesondere eine Detailansicht der Zerspanungseinheit 11 dargestellt.

Die Zerspanungseinheit 11 ist, wie vorstehend erläutert, insbesondere als Fräswerkzeug 11 ausgebildet. Die Zerspanungseinheit 11 kann die Objektteile 9 nach jedem Übertragen einer Schicht 8 und/oder nach der Übertragung von mehreren Schichten 8 zerspanen, um eine höhere Maßhaltigkeit und eine bessere Oberflächengüte zu erzielen. Auch eine untere Planfläche der Objektteile 9 kann hierdurch zerspant werden, sodass eine optimale Planität der Objektteile 9 beziehungsweise des fertigen Objekts 7 erzielt werden kann.

Dies verhindert insbesondere, dass Planitätsfehler der übertragenen Schichten 8 entstehen, welche sich ansonsten in den Objektteilen 9 aufsummieren beziehungsweise sich fortpflanzen können. Hierdurch kann die Qualität des Objekts 7 gesteigert werden.

Die Zerspanungseinheit 11 kann insbesondere aus den Objektteilen 9 herausragende Fasern 26 zerspanen.

Des Weiteren kann die Fertigungsvorrichtung 1 ein System zur Überwachung der Planität aufweisen (nicht gezeigt). Hierfür kann die Fertigungsvorrichtung 1 ein taktiles oder ein berührungsloses System wie etwa ein Laser-Messsystem oder anderweitige optische Systeme aufweisen.

Anhand solcher Messungen, welche auch die gesamte Bauhöhe des Objektteils 9 überwachen können, ist außerdem vorteilhafterweise eine aktive Regelung der verwendeten Materialmengen im Druckprozess auf den Transferplattformen 2 möglich. Des Weiteren ist eine Regelung der Ausrichtung der Transferplattformen 2 über die Stellschrauben 16, welche insbesondere elektrisch angetrieben werden, möglich, sodass die Schichthöhe gezielt lokal geringfügig variiert werden kann, wodurch auf einen möglichen Verzug reagiert und somit das Bauteil weiterhin planar aufgebaut werden kann. Diese Regelung kann anhand der erfassten Planität und/oder Höhe des Objektteils 9 den Materialfluss, insbesondere die Menge des Materials, welches die Ausbringeinheiten 3 auf die Transferplattformen 2 übertragen, regeln.

Hierfür kann die Fertigungsvorrichtung 1 eine Steuereinheit beziehungsweise eine Regeleinheit, insbesondere in Form einer CPU, aufweisen (nicht gezeigt). Diese kann insbesondere die vorstehend erläuterten Verfahrensschritte zur Fertigung eines Objekts mittels der Fertigungsvorrichtung 1 durchführen beziehungsweise steuern/regeln.

Die vorstehend erläuterten Ausgestaltungen der Fertigungsvorrichtung 1 können geeignet miteinander kombiniert werden. Als ein Beispiel von mehreren Möglichkeiten hierfür kann die Fertigungsvorrichtung 1 die Zerspanungseinheit 11 und die Erwärmungsvorrichtung 19 aufweisen.

Neben der vorstehenden schriftlichen Beschreibung der Erfindung wird zu deren ergänzender Offenbarung hiermit explizit auf die zeichnerische Darstellung der Erfindung in den Figuren 1 bis 14 Bezug genommen.

### Bezugszeichenliste

- 1: Fertigungsvorrichtung
- 2: Transferplattform
- 2A: Transferplattformoberfläche
- 3: Ausbringeinheit
- 3A: Druckeinheit
- 3B: Recoater
- 4: Bauplattform
- 4A: Bauplattformoberfläche
- 5: Folienelement
- 6: Halteplatte
- 7: Objekt
- 8: Schicht
- 8A: Behandlungsschicht
- 8B: Materialschicht
- 9: Objektteile
- 10: Druckluft
- 11: Zerspanungseinheit
- 12: Schwingungs-Generator
- 13: Abstandshalter
- 14: Stößel
- 15: Transferplatte
- 16: Stellschraube
- 17: Aktives Stellglied
- 18: Elektromagnet
- 19: Wärmequelle
- 20: Wärme
- 21: Drehvorrichtung
- 22: Rahmen der Fertigungsvorrichtung
- 23: Reinigungsvorrichtung
- 24: Fluid
- 25: Faser-Beaufschlagungsvorrichtung
- 26: Faser
- 27: Walzen
- 100: Herstellen einer Schicht
- 110: Aufbringen der Behandlungsschicht
- 120: Aufbringen der Materialschicht
- 130: Reinigungsschritt
- 140: erster Erwärmungsschritt
- 150: zweiter Erwärmungsschritt
- 200: Übergeben der Schicht
- 210: Annähern
- 220: Pressen
- 230: Ablösen
- 300: Faserverstärkung
- 310: Faser-Beaufschlagung
- 320: dritter Erwärmungsschritt

## Patentansprüche

1. Fertigungsvorrichtung (1) zum schichtweisen Fertigen von Objekten (7), aufweisend
• zumindest eine Transferplattform (2) mit einer Transferplattformoberfläche (2A),
• zumindest eine Ausbringeinheit (3), ausgebildet zum Aufbringen zumindest einer Behandlungsschicht (8A) und zumindest einer Materialschicht (8B), insbesondere umfassend granulatförmiges und/oder pulverförmiges Material, welche zusammen eine Vormaterialschicht des Objektes (7) bilden, auf die Transferplattformoberfläche (2A), wobei sich die Vormaterialschicht insbesondere in eine erste Richtung (x) und in eine zweite Richtung (y) erstreckt, und
• eine Bauplattform (4), ausgebildet zum Übernehmen zumindest der Materialschicht (8B) der Vormaterialschicht von der Transferplattform (2), so dass das Objekt (7) auf der Bauplattform (4) insbesondere in eine dritte Richtung (z) schichtweise hergestellt wird.

2. Fertigungsvorrichtung (1) nach Anspruch 1, **dadurch gekennzeichnet, dass** die Bauplattform (4) eine Bauplattformoberfläche (4A) aufweist und ausgebildet ist, zumindest die Materialschicht (8B) der Vormaterialschicht von der Transferplattform (2) auf der Bauplattformoberfläche (4A) oder auf bereits auf der Bauplattformoberfläche (4A) vorhandene Objektteile (9) des Objektes (7) zu übernehmen.

3. Fertigungsvorrichtung (1) nach Anspruch 2, **dadurch gekennzeichnet, dass** die Bauplattformoberfläche (4A) während des Übernehmens zumindest der Materialschicht (8B) der Vormaterialschicht von der Transferplattform (2) im Wesentlichen parallel zu der Transferplattformoberfläche (2A) ausgerichtet ist.

4. Fertigungsvorrichtung (1) nach einem der vorherigen Ansprüche, umfassend zumindest eine Drehvorrichtung (21), welche eingerichtet ist, die zumindest eine Transferplattform (2) zu drehen, insbesondere um eine Achse im Wesentlichen parallel zur ersten Richtung (x) und/oder um eine Achse (Y) im Wesentlichen parallel zur zweiten Richtung (y) und/oder um eine Achse im Wesentlichen parallel zur dritten Richtung (z) zu drehen.

5. Fertigungsvorrichtung (1) nach einem der vorherigen Ansprüche, umfassend zumindest eine Reinigungsvorrichtung (23), welche eingerichtet ist, durch Ansaugen und/oder Abblasen eines Fluides (24), überschüssiges Material der Materialschicht (8B) von der zumindest einen Transferplattform (2) und/oder der Bauplattform (4) zu entfernen.

6. Fertigungsvorrichtung (1) nach einem der vorherigen Ansprüche, umfassend zumindest eine Schwingungserzeugungsvorrichtung (12), welche eingerichtet ist, mittels Schall und/oder mittels Vibrationen überschüssiges Material der Materialschicht (8B) von der zumindest einen Transferplattform (2) und/oder der Bauplattform (4) zu entfernen.

7. Fertigungsvorrichtung (1) nach einem der vorherigen Ansprüche, umfassend zumindest eine Faser-Beaufschlagungsvorrichtung (25), welche eingerichtet ist, die Vormaterialschicht, insbesondere die Materialschicht (8B) der Vormaterialschicht, auf der Transferplattform (2) und/oder Objektteile (9) des Objektes (7) auf der Bauplattform (4) zumindest teilweise mit Fasern (26) zu beaufschlagen.

8. Fertigungsvorrichtung (1) nach einem der vorhergehenden Ansprüche, **gekennzeichnet durch** eine Vielzahl von Transferplattformen (2), wobei bevorzugt jeder Transferplattform (2) zumindest eine eigene Ausbringeinheit (3) zugeordnet ist.

9. Fertigungsvorrichtung (1) nach einem der vorhergehenden Ansprüche, umfassend zumindest eine Energie-Beaufschlagungsvorrichtung (19), welche eingerichtet ist, der Behandlungsschicht (8A) und/oder der Materialschicht (8B) und/oder den Objektteilen (9) des Objektes (7) Energie zuzuführen, wobei die Energie-Beaufschlagungsvorrichtung (19) insbesondere zum Verdunsten oder Verdampfen der Behandlungsschicht (8A) und/oder zum Plastifizieren der Materialschicht (8B) und/oder zum Schmelzen der Materialschicht (8B) der Vormaterialschicht des Objektes (7) eingerichtet ist.

10. Verfahren zum schichtweisen Fertigen von Objekten (7), aufweisend die Schritte:
• Aufbringen (110) zumindest einer Behandlungsschicht (8A) auf zumindest eine Transferplattform (2) mittels einer Ausbringeinheit (3), wobei sich die Behandlungsschicht (8A) insbesondere in eine erste Richtung (x) und in eine zweite Richtung (y) erstreckt,
• Aufbringen (120) zumindest einer Materialschicht (8B), insbesondere umfassend granulatförmiges und/oder pulverförmiges Material, vor oder nach dem Aufbringen (110) der Behandlungsschicht (8A), auf die Transferplattform (2), wobei die Behandlungsschicht (8A) und die Materialschicht (8B) eine Vormaterialschicht des Objektes (7) bilden,
• Übergeben (200) zumindest der Materialschicht (8B) der Vormaterialschicht von der Transferplattform (2) an eine Bauplattform (4) insbesondere entlang einer dritten Richtung (z), und
• Wiederholen der Schritte des Aufbringens (110, 120) der zumindest einen Behandlungsschicht (8A) und der zumindest einen Materialschicht (8B) und des Übergebens (200), so dass das Objekt (7) auf der Bauplattform (4) insbesondere in die dritte Richtung (z) schichtweise hergestellt wird.

11. Verfahren nach Anspruch 10, **gekennzeichnet durch** einen Reinigungsschritt (130) nach dem Aufbringen (110) der Behandlungsschicht (8A) und nach dem Aufbringen (120) der Materialschicht (8B), bei welchem überschüssiges Material der Materialschicht (8B) von der Transferplattform (2) entfernt wird.

12. Verfahren nach Anspruch 10 oder 11, **gekennzeichnet durch** einen ersten Energie-Beaufschlagungsschritt (140) vor und/oder während und/oder nach dem Aufbringen (110) der Behandlungsschicht (8A) und/oder vor und/oder während und/oder nach dem Aufbringen (120) der Materialschicht (8B).

13. Verfahren nach einem der Ansprüche 10 bis 12, **gekennzeichnet durch** einen zweiten Energie-Beaufschlagungsschritt (150), insbesondere nach dem ersten Energie-Beaufschlagungsschritt (140), bei welchem die Vormaterialschicht auf eine Temperatur insbesondere geringer oder gleich oder größer der Schmelztemperatur oder dem Schmelzbereich des Materials der Materialschicht (8B) erwärmt wird.

14. Verfahren nach einem der Ansprüche 10 bis 13, **gekennzeichnet durch** einen Faser-Beaufschlagungsschritt (310), insbesondere nach dem Reinigungsschritt (130), bei welchem die Vormaterialschicht zumindest teilweise mit Fasern (26) beaufschlagt wird.

15. Verfahren nach Anspruch 14, **gekennzeichnet durch** einen dritten Energie-Beaufschlagungsschritt (320) vor und/oder während des Faser-Beaufschlagungsschritts (310), bei welchem der Vormaterialschicht auf der Transferplattform (2) und/oder den Objektteilen (9) des Objektes (7) auf der Bauplattform (4) vor und/oder während des Beaufschlagens mit Fasern (26) Energie zugeführt wird.
